# EUROPEAN PATENT SPECIFICATION

(11) **EP 3 259 656 B1**
(45) Date of publication and mention of the grant of the patent: **16.12.2020**
(21) Application number: 16702826.5
(22) Date of filing: 07.01.2016
(51) Int. Cl.: G06F 3/043, G06F 3/044, G06K 9/00

(54) **INTERACTIVE TOUCHSCREEN AND SENSOR ARRAY**
INTERAKTIVER BERÜHRUNGSBILDSCHIRM UND SENSORANORDNUNG
ECRAN TACTILE INTERACTIVE ET RÉSEAU DE CAPTEURS

(30) Priority: 20.02.2015 US 201514628025
(43) Date of publication of application: 27.12.2017
(73) Proprietor: Qualcomm Incorporated, San Diego, CA 92121-1714 (US)
(72) Inventor: DICKINSON, Timothy Alan, San Diego, California 92121 (US); BURNS, David William, San Deigo, California 92121 (US); ARCHIBALD, Fitzgerald John, San Deigo, California 92121 (US); SCHNEIDER, John Keith, San Diego, California 92121 (US); DENNIS, Ravit, San Diego, California 92121 (US); BARENBOIM, Lior, San Diego, California 92121 (US)
(74) Representative: Emde, Eric
(86) International application number: PCT/US2016/012510
(87) International publication number: WO 2016/133602

(56) References cited:
- EP-A2- 1 187 056
- WO-A1-2014/197347
- US-A1- 2013 272 586
- US-A1- 2013 287 271

## Description

### TECHNICAL FIELD

Embodiments disclosed herein are generally directed to detecting an object, and more particularly to capturing an image of the object using a sensor array coupled to a touch-sensitive screen.

### BACKGROUND

Mobile devices are ubiquitous and may include a smartphone, tablet computer, personal digital assistant (PDA), portable game console, palmtop computer, wearable health monitor, and other portable electronic devices. A mobile device may be "locked," preventing persons other than the owner of the mobile device from accessing it. The owner may set up a password on the mobile device and be authenticated by entering the password correctly into the mobile device, which may be inconvenient. Rather than have the user enter her password into the mobile device, it may be desirable to use bioinformatics such as fingerprint sensors to authenticate the user.

Many mobile devices available today have capacitive touchscreens, which typically use an insulator, such as glass or plastic, coated with one or more layers of patterned indium tin oxide (ITO) that serves as a transparent conductor. When a human finger touches or is positioned near an active touchscreen, the finger acts as a modest conductor to modify local electric fields. More specifically, when a finger touches the surface of a touchscreen, a distortion of the localized electric field occurs that may be measured as a change in local capacitance between adjacent ITO electrodes, which is then translated into an electrical signal by one or more associated integrated circuits and converted into touch data by algorithms running on one or more local processors.

Conventional capacitive touchscreens have difficulty acquiring fingerprint images because of inherent low resolution and inability to form clear images of fingerprint ridges and valleys, in part due to typical spacings between ITO electrodes that may be ten times that of typical fingerprint ridge-to-valley spacings, and in part due to the relatively shallow valleys of most fingerprints. Capacitance-based fingerprint sensors with higher resolution may work well with thin platens yet have difficulty imaging through typical thicknesses of a cover glass or cover lens of a mobile device display.

WO 2014 197 347 A1 relates to a display device with backside ultrasonic sensor array. The display device has a visual display capable of providing an image and an ultrasonic sensor array attached to a backside component of the visual display. The ultrasonic sensor array may be an ultrasonic area array sensor.

### SUMMARY

The present invention is set forth in the independent claims, respectively. Preferred embodiments of the invention are described in the dependent claims.

Consistent with some aspects, there is provided a system for capturing one or more sensor images of an object. The system includes a touch system including a touch-sensitive screen and a display of a device. The system also includes a sensor system including a sensor array and a processing component. The sensor array is coupled to the touch-sensitive screen, and the processing component is configured to capture one or more images of an object when the object is detected by the touch-sensitive screen. At least a portion of the sensor array overlaps with at least a portion of the touch-sensitive screen.

Consistent with some embodiments there is provided a method of capturing one or more sensor images of an object. The method includes detecting, by a sensor array coupled to a touch-sensitive screen of a device, signals reflected from the object with respect to the touch-sensitive screen. The method also includes capturing, based on the reflected signals, one or more images of the object. At least a portion of the sensor array overlaps with at least a portion of the touch-sensitive screen.

Consistent with some embodiments, there is provided a computer-readable medium having stored thereon computer-executable instructions for performing operations, including detecting, by a sensor array coupled to a touch-sensitive screen of a device, signals reflected from an object with respect to the touch-sensitive screen; and capturing, based on the reflected signals, one or more images of the object, wherein at least a portion of the sensor array overlaps with at least a portion of the touch-sensitive screen.

Consistent with some embodiments, there is provided a system for capturing one or more sensor images of an object. The system includes means for detecting signals reflected from the object with respect to a touch-sensitive screen of a device. The system also includes means for capturing one or more images of the object based on the reflected signals. When the object is located above the means for capturing the one or more images, the object is located above at least a portion of the touch-sensitive screen.

### BRIEF DESCRIPTION OF THE DRAWINGS

FIG. 1 is a block diagram illustrating a mobile device including an object detection system, consistent with some embodiments.
FIG. 2 is a block diagram illustrating a process flow using an object detection system for acquiring fingerprint image information or enhancing the image quality of biometrics, consistent with some embodiments.
FIG. 3 is a block diagram illustrating components of an object detection system in a mobile device, consistent with some embodiments.
FIG. 4 is a block diagram illustrating a side view of components of the object detection system in the mobile device in FIG. 3, consistent with some embodiments.
FIG. 5 is a block diagram illustrating an object detection system including piezoelectric micro-machined ultrasonic transducer (PMUT) technology, consistent with some embodiments.
FIG. 6 is a flowchart illustrating a method of capturing one or more sensor images of an object, consistent with some embodiments.
FIG. 7 is a block diagram illustrating imaging regions where a user's fingerprint is captured and analyzed, consistent with some embodiments.
FIG. 8 is a block diagram illustrating a sensor array receiving an image of a portion of a user's fingerprint, consistent with some embodiments.
FIGs. 9A-9C show example fingerprints of portions of a finger, consistent with some embodiments.
FIG. 10 is a flowchart illustrating a method of guiding a user to perform fingerprint enrollment and/or finger position or rotation changes, consistent with some embodiments.
FIG. 11 is a flowchart illustrating a method of matching particular features and a finger outline with a corresponding image or feature template, consistent with some embodiments.
FIG. 12 is a flowchart illustrating a method of insonifying one or more positions and/or areas of a touch-sensitive screen, consistent with some embodiments.
FIG. 13 shows a chart including an electrocardiogram (ECG) signal and a line graph representing ventricular pressure associated with a finger, consistent with some embodiments.
FIG. 14 is a block diagram illustrating a process flow using an object detection system for detecting liveness using a sensor array and an adapted PCT touchscreen, consistent with some embodiments.
FIG. 15 is a block diagram illustrating a process flow using an object detection system for detecting liveness using a sensor array with peripheral capacitive sense electrodes, according to an alternative example.
FIG. 16 is a block diagram illustrating a plan view of a sensor array with peripheral capacitive sense electrodes, according to an alternative example.
FIG. 17 is a block diagram illustrating a process flow using segmented bias electrodes on the upper layers of the sensor array, consistent with some embodiments.
FIG. 18 is a diagram illustrating a platform capable of capturing one or more sensor images of an object, consistent with some embodiments.

### DETAILED DESCRIPTION

I. Example System Architecture
   A. Touch System
   B. Sensor System
II. Sensor System Coupled to a Touch System for Object Detection and Imaging
   A. Touch Data
   B. Fingerprint Data
   C. Sensor Data and Device Status Information
   D. Process Touch Data, Fingerprint Data, Sensor Data, and/or Device Status Information
III. Components of an Object Detection System
IV. Sensor Array
   A. Power Reduction
   B. Size Reduction
   C. Self-Calibration of Sensor Position
V. Object Outline and Rotation
   A. Touch-Assisted Enrollment
   B. Touch-Assisted Inquiry
VI. Multi-Finger Authentication
VII. Liveness Detection
VIII. Example Computing System

In the following description, specific details are set forth describing certain embodiments and other examples. The specific details presented are meant to be illustrative, but not limiting.

### 1. Example System Architecture

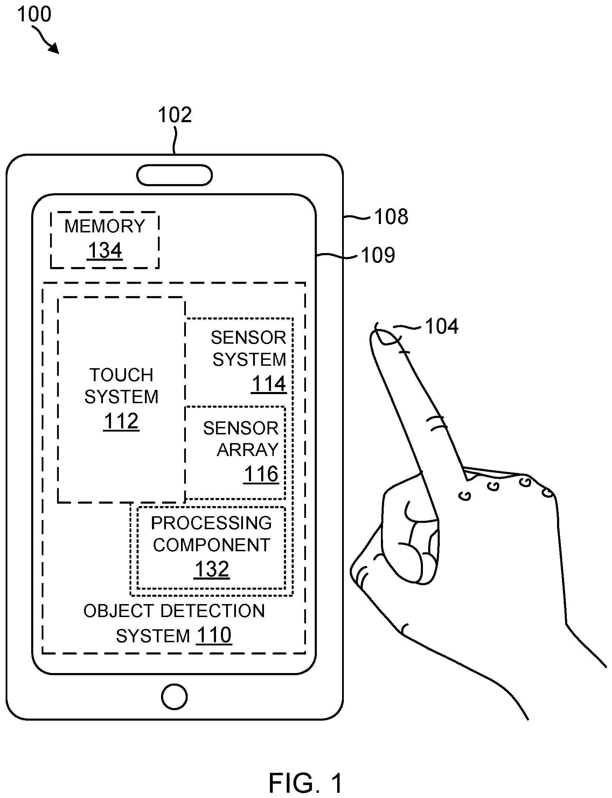

FIG. 1 is a block diagram 100 illustrating a mobile device 102 including an object detection system 110, consistent with some embodiments. Mobile device 102 may be, for example, a laptop, smartphone, personal digital assistant, tablet computer, wearable health monitor, or other portable electronic device. Although mobile device 102 is shown as a non-stationary device, it should be appreciated that in other embodiments, a computing device including object detection system 110 may be a stationary device such as, for example, a personal computer, television, digital kiosk, electronic cash register, or digital security system.

Object detection system 110 may be used to detect an object 104 such as a stylus or a finger of a user within a proximity of mobile device 102 and to capture one or more images of the object. Object detection system 110 may include a touch system 112 coupled to a sensor system 114 that work together to enhance the user's experience.

### A. Touch System

Touch system 112 includes a touch-sensitive screen and a visual display 109 of mobile device 102. The touch-sensitive screen, referred also to herein as a "touchscreen," may be incorporated into the display or positioned above the display of mobile device 102. In some embodiments, the touch-sensitive screen is a resistive touch-sensitive screen that responds to pressure applied to the screen. In some embodiments, the touch-sensitive screen is optical, radio frequency (RF), infrared (IR) or some other type of sensor.

In some embodiments, the touch-sensitive screen may be a capacitive touchscreen. Capacitive touchscreens, in particular projected capacitive touch (PCT) screens, may use the conductive and dielectric properties of a finger, stylus or other object along with arrays of transparent conductive electrodes and associated circuitry to determine the position and movement of object 104 (e.g., one or more of a user's finger or stylus) across the screen. As such, touch system 112 may use capacitive sensing technology to detect the location of object 104 by measuring small currents or displaced charges as a finger or other object 104 traverses and distorts electric field lines between adjacent or overlapping conductive traces of the capacitive touchscreen. Capacitive touchscreens typically operate at low power and are an available feature in many mobile devices. Touch system 112 may be embedded, embodied, attached or otherwise incorporated into mobile device 102. Touch system 112 may have lower resolution than sensor system 114, and be incapable of receiving certain details about object 104.

### B. Sensor System

Sensor system 114 may include a sensor array 116 and one or more processing components 132. Sensor array 116 may be coupled to the touch-sensitive screen and may reside underneath at least a portion of the display or the whole part of the display, and/or may be integrated and built into the display of mobile device 102. In some implementations, sensor array 116 may be coupled to the touch-sensitive screen with a coupling material such as an epoxy, a pressure-sensitive adhesive (PSA), or other adhesive material. In some implementations, sensor array 116 may be laminated or otherwise bonded to the backside of the touch-sensitive screen or to the backside of the visual display. In some implementations, sensor array 116 may be fabricated or otherwise formed behind or as part of the visual display, touch-sensitive screen, or cover glass that may reside in front of the display. In some implementations, the sensor array may overlap some or all of the display and/or touchscreen.

Sensor array 116 may include one or more transmitters for transmitting signals and one or more receivers for picking up or receiving signals transmitted by the transmitters. Sensor array 116 may be, for example, an ultrasonic sensor array, capacitive sensor array, optical sensor array, radio frequency (RF) sensor array, infrared (IR) sensor array, force-sensitive resistor (FSR) array, or other type of sensor array. A quantity of receivers and transmitters (neither is illustrated) included in sensor array 116 may depend on its size. For example, sensor array 116 may be approximately 3.2 inches x 3.0 inches, 1 inch x 1 inch, 11 millimeters (mm) x 11 mm, 15 mm x 6 mm, 9 mm x 4mm, or 4mm x 4mm. These are merely examples, and the size of sensor array 116 may vary.

In some embodiments, the transmitters may transmit a signal pattern of ultrasonic waves, and object 104 may be within a proximity of or may be positioned on or over a surface of the touch-sensitive screen, causing the ultrasonic waves to reflect back toward the sensor array. In an example, the transmitters transmit an ultrasonic signal. In this example, the transmitters may be any suitable ultrasonic device that includes one or more ultrasonic transducers such as a piezoelectric ultrasonic plane wave generator to generate ultrasonic signals. The receivers may receive the reflected signal pattern from object 104 and may be any suitable ultrasonic receiver. The receivers may continuously run such that they are always ready to receive input from the transmitters when mobile device 102 is turned on.

Processing component 132 may perform various operations of activating and accessing the sensor array and determining a position of object 104 based on the reflected signal pattern. Processing component 132 may extract ultrasonic signals received, detected and captured by the receivers of sensor array 116 and track the movement of object 104 to detect relatively accurate positions of object 104. Processing component 132 may capture or extract images (e.g., images based on ultrasonic, capacitive, optical, RF, IR, or FSR technologies) of the object.

Although sensor system 114 may be described as an ultrasonic sensor system and processing component 132 may be described as processing ultrasonic signals and capturing an ultrasonic image, this is not intended to be limiting. Sensor system 114 may be, for example, a capacitive sensor array, optical sensor array, radio frequency (RF) sensor array, infrared sensor array, force-sensitive resistor array, or other type of sensor array.

In some embodiments, processing component 132 may extract ultrasonic signals detected by the ultrasonic sensor array and determine whether to store the one or more ultrasonic images (which may include fingerprint, blood vessel structure, sweat pore details, etc.) of the object. Processing component 132 may store the ultrasonic image if it meets a certain threshold, for example if it is clear, and discard it if it is unclear. In some embodiments, processing component 132 may include one or more processors, central processing units (CPUs), image signal processors (ISPs), micro-controllers, or digital signal processors (DSPs), graphics processing units (GPUs), or audio signal processors, which may include analog and/or digital audio signal processors. Sensor system 114 may be embedded, embodied, attached, or otherwise incorporated into mobile device 102. In some implementations, sensor array 116 of sensor system 114 may be positioned underneath, incorporated into, or otherwise included with the touch-sensitive screen or the visual display of mobile device 102. In some implementations, the touch-sensitive screen may be positioned above, incorporated into, or otherwise included with the display of mobile device 102

Mobile device 102 also includes a memory 134. Memory 134 may include a system memory component, which may correspond to random access memory (RAM), an internal memory component, which may correspond to read only memory (ROM), and/or an external or static memory, which may correspond to optical, magnetic, or solid-state memories, for example. Memory 134 may correspond to a non-transitory machine-readable medium that includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, and/or any other medium from which processing component 132 is capable of reading.

### II. Sensor System Coupled to a Touch System for Object Detection and Imaging

A user may interact with touch system 112 by touching the touch-sensitive screen, which detects the position of object 104 on the surface of the touch-sensitive screen. When object 104 is positioned on or over sensor array 116, the transmitter (e.g., ultrasonic transmitter) included in sensor array 116 may be fired to acquire one or more images (e.g., ultrasonic images) of the object. The user may interact with touch system 112 before interacting with sensor system 114.

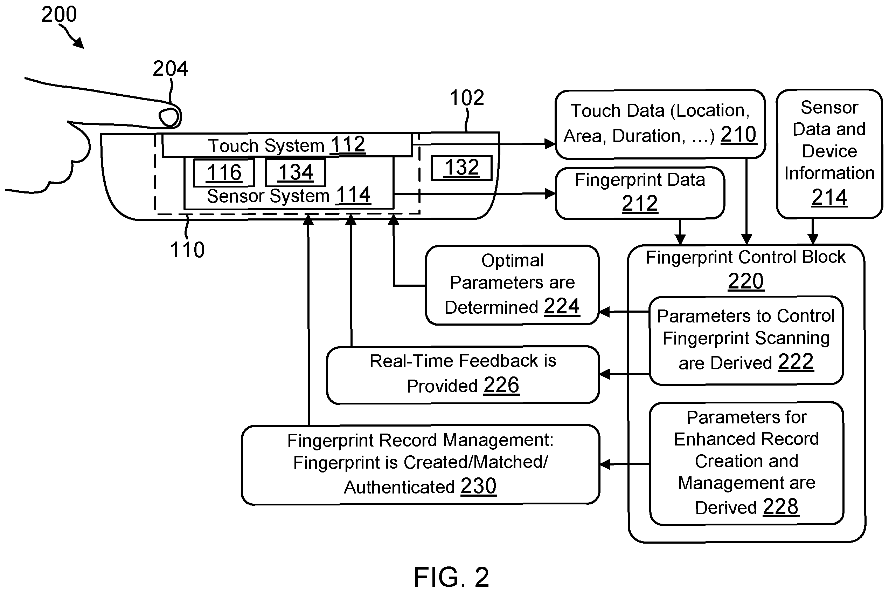

FIG. 2 is a block diagram 200 illustrating a process flow using an object detection system 110 for acquiring fingerprint image information or enhancing the image quality of biometrics, consistent with some embodiments. In the example illustrated in FIG. 2, the object is a finger 204, and the touch-sensitive screen may aid in acquiring fingerprint sensor data or be used to enhance the fingerprint image quality and/or other aspects of fingerprinting through a touch interface (e.g., a capacitive touch interface). Although the biometrics may be described as being a user's fingerprint, this is not intended to be limiting and the biometrics may include other identifying information (e.g., the user's palm print).

FIG. 2 illustrates a side view of mobile device 102 and a finger 204 touching a surface of the touch-sensitive screen of mobile device 102. In the example illustrated in FIG. 2, touch system 112 is positioned above sensor system 114, and at least a portion of sensor array 116 overlaps with at least a portion of the touch-sensitive screen. In particular, sensor array 116 is positioned such that when finger 204 touches the touch-sensitive screen, finger 204 may also be positioned on or over at least a portion of sensor array 116.

The display is fingerprint-detection enabled in the portion in which sensor array 116 overlaps with the touch-sensitive screen while the remaining non-overlapping portions are not fingerprint-detection enabled. Sensor system 114 may be referred to as a fingerprint sensor system, and sensor array 116 may be referred to as a fingerprint sensor.

### A. Touch Data

In some implementations, the display may provide a prompt requesting that the user scan her finger in order to be authenticated. Mobile device 102 may allow the user access to applications and data stored in mobile device 102 if the user is authenticated, and prevent the user from accessing applications and data stored in mobile device 102 if the user is not authenticated.

The user may interact with the display by placing finger 204 on the surface of the touch-sensitive screen. At an action 210, touch system 112 may receive and process touch data including one or more touch parameters from the user's touch. Touch system 112 may pass one or more of the touch parameters to a fingerprint control block 220. The touch parameters may be used to derive how and when sensor system 114 should capture an image of the object.

Touch system 112 may derive touch parameters from the user's touch such as the touch size, area, location, x-y position, angle and orientation of the user's finger, movement and/or rate of movement of the user's finger, and the touch down time (e.g., the duration of time in which the user's finger is touching the touch-sensitive screen) of an object touching the touch-sensitive screen of the device. In one example, if the user's finger is still moving, it may be ineffective to capture an image of the user's fingerprint. A more ideal time to capture the image is when, for example, the user's finger is practically still and within a threshold proximity to the touch-sensitive screen (e.g., touching the touch-sensitive screen).

In another example, the touch parameters may be used to determine when a user's finger is positioned over the fingerprint sensor array 116 to allow timely capture and acquisition of fingerprint images and to prevent unnecessary firings or activations of the sensor array 116 when no finger is present, reducing overall power consumption by the mobile device 102. In another example, the touch parameters may be used to determine if the object is likely a finger, a palm or a stylus (e.g. based on the area or outline of the object against the touchscreen), and activate portions of the sensor array 116 accordingly. In another example, touch parameters that can detect multiple simultaneous touches (e.g., multi-touch capability) may be used to trigger portions of the sensor array 116 associated with the locations where multiple finger touches have been detected, to allow simultaneous fingerprinting of two, three, four or five fingers. In some implementations, the position and orientation of a finger may be detected by the touchscreen, and used to aid in enrollment and/or verification of the user with the fingerprint sensor system.

Touch system 112 may also derive touch parameters from the movement of or data related to mobile device 102 such as the movement rate of the mobile device, touch signal level data (e.g., threshold or signal to noise ratio (SNR)), or grip detection. Grip detection may refer to data regarding the user's grip on the mobile device. For example, touch system 112 may be able to realize which hand the user is using to hold the mobile device (e.g., right or left hand), where the user is gripping the mobile device (e.g., top, bottom, left- and/or right-side) and which hand is touching the screen (e.g., left or right hand is being used to select a particular number displayed on a keypad).

### B. Fingerprint Data

At an action 212, sensor system 114 may receive and process fingerprint data. In some embodiments, sensor system 114 may include fingerprint hardware and circuitry to process images captured from the ultrasonic waves reflected from the user's finger. Sensor system 114 may pass the fingerprint data to fingerprint control block 220. When finger 204 is positioned over sensor array 116, an ultrasonic transmitter included in sensor array 116 may be fired to acquire one or more ultrasonic images of finger 204.

### C. Sensor Data and Device Status Information

At an action 214, sensor data and/or device status information may be retrieved and passed to fingerprint control block 220. Mobile device 102 may include a device sensor such as a temperature sensor (e.g., ambient temperature, phone temperature, and temperature of the sensor and/or touch-sensitive screen) and/or humidity sensor that provide the sensor data to allow for sensor compensation.

Mobile device 102 may also include one or more gyroscopes and accelerometers and/or a global positioning system (GPS) to determine, for example, whether the user is moving or how fast the user is moving. For example, if the user is running, it may be ineffective to capture an image of the user's fingerprint. In such an example, mobile device 102 may allow the user to unlock mobile device 102 but not allow the user to make a purchase online because the purchase may be unintentional on the user's part. A more ideal time to capture an image of the user's fingerprint is when, for example, the user's finger is practically still and within a threshold proximity to the touch-sensitive screen. Additionally, device status information such as cellular status, RF signal level (e.g., strong, medium, or weak signal), and/or battery level may be retrieved and passed to fingerprint control block 220.

### D. Process Touch Data, Fingerprint Data, Sensor Data and/or Device Status Information

The touch data (see action 210), fingerprint data (see action 212), and sensor data and/or device status information (see action 214) may provide context into the user's movements and assist sensor system 114 in determining whether it is a suitable time to capture an image of the user's fingerprint or whether it may be desirable to identify different parameters processed by sensor system 114 in order to capture a different image of the fingerprint or capture a fingerprint image at a later time.

In the fingerprint control block 220, data may be synthesized and provide context and realizations in a variety of ways. At an action 222, parameters that may control fingerprint scanning may be derived. The touch data, fingerprint data, sensor data, and/or device status information may be synthesized in order to realize optimal fingerprint sensor operating parameters, and an output of action 222 may adjust the parameters of the fingerprint sensor system to obtain a high-quality fingerprint image. For example, at an action 224, optimal tuning parameters for the sensor system 114 and the optimal time to activate the scanning hardware may be determined and passed to object detection system 110.

At an action 226, data may be synthesized to provide real-time feedback to the user and passed to object detection system 110. In an example, real-time feedback with one or more recommendations for finger positional adjustments may be provided to the user via the display. In particular, the real-time feedback may provide suggestions to users on how to adjust their finger(s) or hand(s) to increase the probability of obtaining a good image of their fingers. For example, sensor system 114 may be able to determine where the user is touching, portions of the touchscreen or visual display to touch for capturing a clear fingerprint image, whether mobile device 102 is being jostled around too much, and/or whether a good fingerprint image has been acquired.

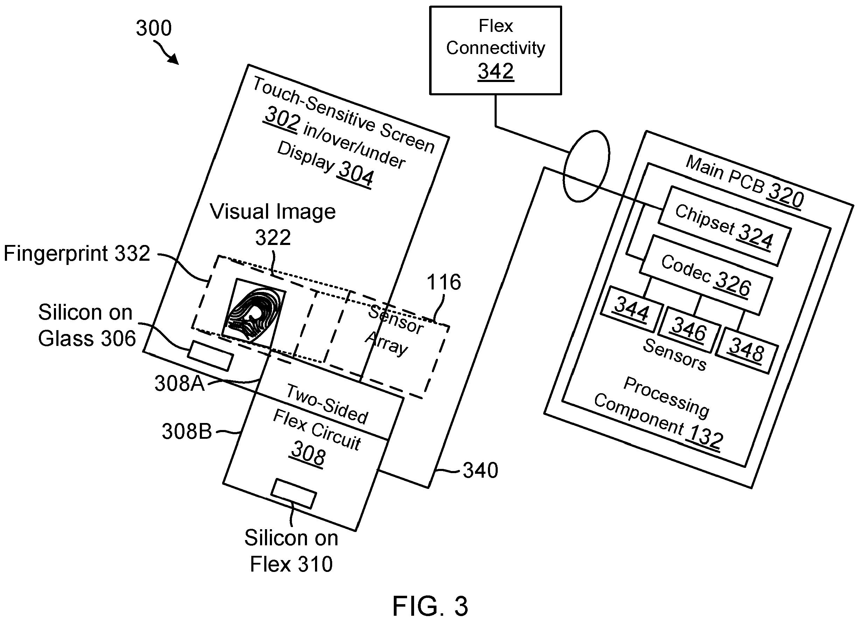

Object detection system 110 may provide, for example, visual, audible, and/or haptic feedback to the user via the system user interface. An example of visual feedback may be providing a visual symbol (e.g., a bounded box or an illustration of a fingerprint with the text "Touch Here" in close proximity to the bounded box or fingerprint illustration) on the display of mobile device 102 indicating where on the touch-sensitive screen the user should touch to enable the system to capture a good image of the user's fingerprint (see visual image 322 in FIG. 3).

Another example of a visual display may be providing a prompt on the display of mobile device 102 indicating that an image of the user's fingerprint has been successfully captured or has not been successfully captured because of, for example, the movement of mobile device 102 or excessive movement of a finger during an image acquisition event. Another example of a visual display may be causing a green light emitting diode (LED) coupled to mobile device 102 to be lit in order to indicate that the user's fingerprint has been successfully captured, and causing a red LED coupled to mobile device 102 to be lit in order to indicate that the user's fingerprint has not been successfully captured. In some implementations, audio feedback such as a tone, sound or verbal response may be provided to the user. In some implementations, haptic feedback may be provided to the user, such as a buzz or click when a fingerprint image is being acquired or when enrollment, matching or authentication has been successful.

At an action 228, parameters for enhanced record creation and management may be derived. When finger 204 touches the touch-sensitive screen, sensor array 116 may be an ultrasonic sensor array that is fired and scans finger 204. In this example, processing component 132 acquires one or more ultrasonic images of the user's fingerprint and may store the fingerprint images or associated fingerprint features in memory 134 (see FIG. 1). Fingerprint features may include the type, position and angle of various minutiae associated with the fingerprint. To ensure security, processing component 132 may encrypt the fingerprint image or features and then store the encrypted fingerprint image or features in memory 134.

If processing component 132 is aware of which hand (e.g., the right or left hand), finger (e.g., the thumb, index, middle, ring or pinky finger), and/or part of the user's finger (e.g., the tip, middle, side or bottom) is being used to create the fingerprint image, processing component 132 may be able to more easily match the user's fingerprint image or features with another fingerprint image or features stored in memory 134.

It may be desirable to minimize the size of sensor array 116 to reduce costs. If sensor array 116 is small, a small number of minutiae or features of the user's finger may be captured and a determination of whether the user's fingerprint image matches another fingerprint image is made based on a small amount of data. Accordingly, to obtain more accurate and quicker results, it may be helpful to know which part of the user's finger was captured and represented by the fingerprint image.

At an action 230, data may be synthesized to enhance fingerprint record management to, for example, create, match, and/or authenticate the user's fingerprint image. If the user is setting up her account, processing component 132 may capture an image of finger 204, analyze the fingerprint image for minutiae and/or features, and store the minutiae and/or features as fingerprint template information (also known as a fingerprint "template") in memory 134. The image may be based on sensor array 116's interaction with the object. At a later point in time, if processing component 132 determines that the captured fingerprint image of finger 204 matches a stored fingerprint template in memory 134, processing component 132 may authenticate the user. In contrast, if processing component 132 determines that the captured fingerprint image of finger 204 does not match any of the stored templates in memory 134, processing component 132 may determine that the authentication failed and not authenticate the user.

### III. Components of an Object Detection System

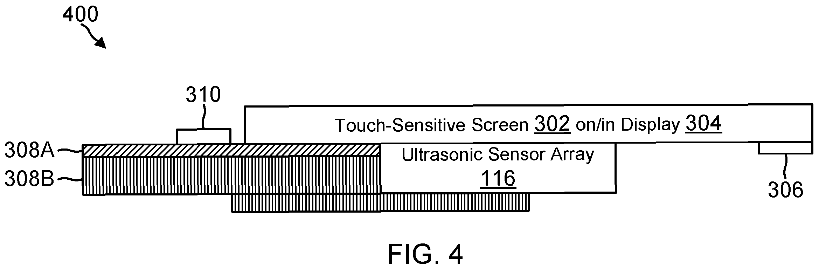

FIG. 3 is a block diagram 300 illustrating components of object detection system 110 in mobile device 102, consistent with some embodiments. FIG. 4 is a block diagram 400 illustrating a side view of the components of object detection system 110 in mobile device 102 of FIG. 3, consistent with some embodiments.

In FIG. 3, touch system 112 includes a touch-sensitive screen 302 and a visual display 304. Touch-sensitive screen 302 may be incorporated into display 304 or positioned above or below display 304 of mobile device 102. In one example, touch-sensitive screen 302 may be a resistive touchscreen. In another example, touch-sensitive screen 302 may be a projected capacitive (PCAP) touchscreen, also known as projected capacitive touch (PCT). The projected capacitance sensing hardware may include a glass top or cover layer with an array of N sensor electrodes (e.g., row electrodes), an insulating layer, and a crisscrossed array of M sensor electrodes (e.g., column electrodes) below the glass substrate.

Touch-sensitive screen 302 may be made of a glass material and include a silicon on glass component 306 that resides below the touch-sensitive screen. In some embodiments, a display driver, PCT front-end (analog front end or AFE), and a fingerprint sensor AFE may be combined into silicon-on-glass component 306. Each AFE may include one or more analog-to-digital converters and associated timing circuitry for acquiring and converting data from the various sensors. As such, a high degree of interaction may occur between the display driver, touch AFE, and fingerprint sensor AFE without leaving the silicon-on-glass component 306. Although touch-sensitive screen 302 is described as being made of a glass material, it should be understood that touch system 112 may be made of any transparent material. For example, touch-sensitive screen 302 may be made of a polycarbonate or sapphire material.

A two-sided flex circuit 308 may be positioned between touch-sensitive screen 302 and sensor array 116. Sensor array 116 may reside on the flex, the glass, or otherwise coupled to the touchscreen. Two-sided flex circuit 308 is an electrical and physical interface, and may include two or more conductive layers with insulating layers between them. The outer conductive layers may have exposed pads that may be accessed from one or both sides of the flex. Sensor array 116 may use electrical connections on flex circuit 308 to provide power and retrieve fingerprint sensor data. Similarly, touch-sensitive screen 302 may use electrical connections on flex circuit 308 to generate and receive electrical signals for detecting one or more touches on the screen surface. Similarly, display 304 may use electrical connections on flex circuit 308 to provide power and receive display information flowing from a main printed circuit board (PCB) 320.

In one example, two-sided flex circuit 308 may feed electrical connections upward to display 304 via flex portion 308A and downward to sensor array 116 via flex portion 308B, so that data can be passed to and/or received from each other and main PCB 320. In another example, two-sided flex circuit 308 may feed electrical connections upward to display 304 via flex portion 308B and downward to sensor array 116 via portion flex 308A, so that data can be passed to and/or received from each other and main PCB 320. Additionally, plated-through holes in two-sided flex circuit 308 may provide connections between touch-sensitive screen 302 and sensor array 116.

Two-sided flex circuit 308 may include one or more silicon-on-flex components 310 that reside on one or both sides of flex circuit 308. In some embodiments, a fingerprint transmitter (Tx) driver section and one or more fingerprint/touch low-dropout (LDO) voltage regulators may be combined into silicon-on-flex component 310. The power supplies for the silicon-on-flex component 310 may be shared with other integrated circuits (ICs).

As discussed above, a visual prompt requesting the user to scan her finger for authentication may appear on display 304. The prompt may be accompanied by one or more audio tones, verbal commands, or haptic feedback to augment or validate the request. Main PCB 320 may operate and send data to display 304 and provide a visual image 322 to show the user where to place her finger on a surface of touch-sensitive screen 302 or display 304. Visual image 322 is shown as a dashed box and may indicate the outline of the active area of sensor array 116 coupled below it. In FIG. 3, sensor array 116 is projected downward in an exploded view. The visual image 322 may be approximately the size of or smaller than the size of the active area (image capturing area) of sensor array 116.

Main PCB 320 may include processing component 132 having a chipset 324 with one or more mobile station modems (MSMs) and one or more codecs (coder-decoders) 326. Chipset 324 with one or more digital processors may perform fingerprint processing and/or control the display interface. Chipset 324 may perform action 214 (see FIG. 2) and process the sensor data and device information. For example, chipset 324 may perform sensor hub processing, touch processing, and mode control (e.g., fingerprint, touch, and sensor mode control). Chipset 324 may be configured to wake up sensor system 114 and/or sensor array 116, for example, when a user touches an appropriate portion of touch-sensitive screen 302 that is above or near the sensor array 116. Some of these functions may be performed in chipset 324 and/or codec 326. Codec 326 may perform traditional functions such as encode and/or decode audio and video streams for various speakers, microphones, displays and cameras (e.g. sensors 344, 346 and/or 348) associated with mobile device 102.

When touch system 112 is active, the user may place her finger on touch-sensitive screen 302 within the bounded dashed box of visual image 322 such that sensor system 114 is fired and processing component 132 captures an image of the user's fingerprint 332. Touch system 112 may process the user's touch and send the touch data (see action 210 in FIG. 2) to main PCB 320 via or more electrical connections 340. Flex connectivity 342 may include one or more connections 340 to allow for serial peripheral interface (SPI) connectivity for the touch and fingerprint data, mobile industry processor interface (MIPI) for the display, and power and ground connections. Flex connectivity 342 may include the same or different SPIs for touch and fingerprint data.

One or more processors in chipset 324 may analyze touch data from touch-sensitive screen 302 and determine whether to capture an image of fingerprint 332. For example, if the user is moving and fingerprint 332 is not clear or is blurred, chipset 324 may determine to not capture an image of fingerprint 332. If chipset 324 determines that fingerprint 332 is a good candidate for capturing its image, chipset 324 may activate sensor array 116, which may then communicate with the fingerprint AFE to run a scan of fingerprint 332 with the touch parameter data and any adjustments. Sensor array 116 may scan fingerprint 332 for a predetermined period of time and send the fingerprint data to processing component 132 for processing. Processing component 132 may, for example, create a template or record of the fingerprint image for enrollment, or determine whether the templates or fingerprint image matches any of the fingerprint images stored in memory 134 (FIG. 1) for verification or authentication of the user.

In FIG. 4, touch-sensitive screen 302 may be incorporated into or located above display 304, and sensor array 116 is positioned underneath a portion of touch-sensitive screen 302 and display 304. It should be understood that the example in FIG. 4 is not intended to be limiting, and the location of the components in FIG. 4 may be different from that shown.

The components residing in silicon-on-glass component 306 and silicon-on-flex component 310 may vary based on various implementations. In one example, the display driver and touch AFE may be combined into silicon-on-glass component 306, and fingerprint transmitter driver section, fingerprint/projected capacitive touch LDOs, and fingerprint AFE are combined into silicon-on-flex component 310. In another example, the display driver may be included in silicon-on-glass component 306, and the touch AFE, fingerprint transmitter driver section, fingerprint/projected capacitive touch LDOs, and fingerprint AFE are combined into silicon-on-flex component 310.

Additionally, more than one silicon component may reside on the glass of the touch-sensitive screen and more than one silicon component may reside on the flex circuit. If the touch AFE and fingerprint AFE reside in the same chip, they may use the same SPI. If the touch AFE and fingerprint AFE reside in different chips, they may each use their own SPI. By using two SPIs, it may be more challenging and expensive to run wires or other electrical connections between main PCB 320 and two-sided flex circuit 308, yet be more flexible.

In one example, the display driver may reside in silicon-on-glass component 306, and two different silicon components reside on the two-sided flex circuit 308. In another example, fingerprint transmitter driver section and fingerprint/touch LDOs may reside in a first silicon-on-flex component (not shown), and touch AFE and fingerprint AFE are combined into a second silicon-on-flex component (not shown). In another example, fingerprint transmitter driver section and fingerprint/projected capacitive touch LDOs reside in a first silicon-on-flex component, and touch AFE resides in a second silicon-on-flex component (not shown).

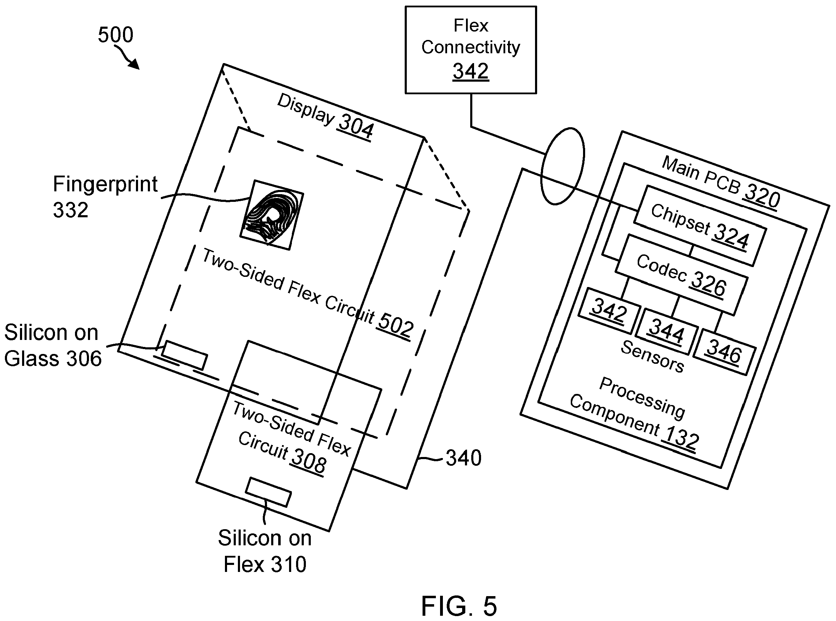

FIG. 5 is a block diagram 500 illustrating object detection system 110 including piezoelectric micro-machined ultrasonic transducer (PMUT) technology, consistent with some embodiments. A PMUT touch/fingerprint sensor 502 may encompass the whole display (as shown) or may be smaller than the display. In one embodiment, silicon-on-glass component 306 may include a display driver, and silicon-on-flex component 310 may include a PMUT AFE. In another embodiment, the display driver and PMUT AFE may be combined into a single silicon-on-glass component 306.

As discussed above and further emphasized here, FIGs. 1-5 are merely examples, which should not unduly limit the scope of the claims. For example, although one object is illustrated as being detected by object detection system 110, it should be understood that more than one object (e.g., multiple fingers, finger and stylus, etc.) may be detected.

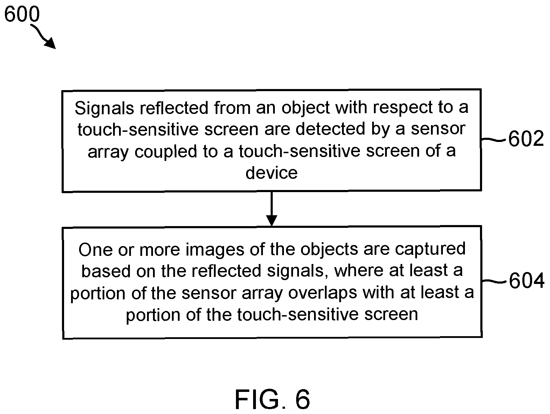

FIG. 6 is a flowchart illustrating a method 600 of capturing one or more sensor images of an object, consistent with some embodiments. Method 600 is not meant to be limiting and may be used in other applications.

Method 600 includes blocks 602-604. In a block 602, signals reflected from an object with respect to a touch-sensitive screen of a device may be detected by a sensor array coupled to the touch-sensitive screen. In an example, sensor array 116 is an ultrasonic sensor array that detects ultrasonic signals reflected from object 104 with respect to the touch-sensitive screen of mobile device 102.

In a block 604, one or more images of the object may be captured based on the reflected signals, where at least a portion of the sensor array overlaps with at least a portion of the touch-sensitive screen. In an example, sensor array 116 is an ultrasonic sensor array and processing component 132 captures, based on reflected ultrasonic signals, one or more ultrasonic images of object 104, where at least a portion of the ultrasonic sensor array overlaps with at least a portion of the touch-sensitive screen.

It is also understood that additional processes may be performed before, during, or after blocks 602-604 discussed above. It is also understood that one or more of the blocks of method 600 described herein may be omitted, combined, or performed in a different sequence as desired. In an embodiment, blocks 602-604 may be performed for any number of objects hovering over or positioned on a surface of the touch-sensitive screen (e.g., multiple fingers).

### IV. Sensor Array

### A. Power Reduction

Referring again to FIG. 2, sensor system 114 may consume appreciable power when functioning and may consume additional power when generating ultrasonic waves for ultrasonic fingerprint sensor arrays. Due to the moderately high power consumption for driving an ultrasonic transmitter associated with an ultrasonic sensor array 116, it may be desirable to minimize the transmitter on-time and reduce the amount of power that sensor system 114 consumes.

In some embodiments, processing component 132 may turn sensor array 116 off or place sensor array 116 into a low-power mode such that the transmitters do not transmit signals and/or the receivers do not capture or otherwise process received signals. For example, processing component 132 may refrain from sending a transmitter enable signal or drive voltage to an ultrasonic sensor array 116, preventing ultrasonic waves from being generated until needed for ultrasonic imaging. Similarly, processing component 132 may place a receiver portion of the sensor array 116 into a low-power or sleep mode until an image is needed, reducing overall power consumption. Processing component 132 may also be placed in a sleep mode for a period of time. The touch-sensitive screen is typically active and used to track the movement of the object. In particular, the touch-sensitive screen may be used to determine when finger 204 has stopped moving and when finger 204 is positioned over an active area of sensor array 116. Acquired fingerprint images may be clearer and more precise if the user has stopped movement of finger 204 when images of the finger are captured.

Touch sensors and touch-sensitive screens may consume less power than sensor system 114, so that in some implementations, a touch sensor or touch-sensitive screen may be used to detect a finger or other object, which may in turn trigger processing component 132 to wake up the fingerprint sensor. For example, if the detected area and/or outline of an object positioned on the touch-sensitive screen is similar in size and shape to that of a finger rather than a stylus or the inside of a protective case, then processing component 132 may wake up and invoke sensor system 114 and sensor array 116. Further, if coordinates of the finger or finger outline are within an image capture area (active area) of the sensor array 116, then one or more sensor images of the finger may be captured.

Touch system 112 may detect finger 204 on the surface of the touch-sensitive screen and send a signal to processing component 132 regarding the detected finger. If portions of processing component 132 are asleep, needed portions may be woken up or taken out of a sleep mode. Processing component 132 may detect when finger 204 is within the fingerprint sensor area. In response to detecting that finger 204 is within the fingerprint sensor area, processing component 132 may turn sensor array 116 on such that one or more transmitters fire off signals (e.g., ultrasonic signals), and one or more receivers receive the reflected signal patterns from finger 204. An appropriate time to turn sensor array 116 on might be when the finger has stopped moving and has settled into a relatively stationary position that is above an active area of the fingerprint sensor array. Processing component 132 may then acquire and process the reflected signal patterns to capture one or more images of the finger.

In one example, mobile device 102 may be asleep with the touchscreen and display off. A user may place a finger on a designated area such as a home button to wake up mobile device 102. If the touch-sensitive screen includes one or more capacitive touch sensors near a periphery of the screen, the capacitive touch sensors may be used to sense only a portion of the touch-sensitive screen (e.g., region around and including sensor array 116) at a low repetition rate to save power. In another example, only validated touches in a designated area of a touch-sensitive screen where a fingerprint sensor array is located may be acted upon when the touchscreen and display are in a low-power mode (e.g., the touch-sensitive screen wakes up and switches to a higher scan rate of capacitive sense channels (rows and columns) only in the designated area, wakes up the fingerprint sensor array, and initiates an image acquisition cycle). Other touches may be ignored because the capacitive sense channels outside the designated area may be off or the touches are made in a region outside the designated sensor area.

In some implementations, sensor system 114 may switch between a capture mode and a non-capture mode. If sensor system 114 is in the capture mode, sensor system 114 is active and captures an image of the fingerprint when it is within a threshold proximity to the touch-sensitive screen. If sensor system 114 is in the non- capture mode, sensor system 114 is active and does not capture an image of the fingerprint (even if it is within the threshold proximity to the touch-sensitive screen).

In some implementations, if a user touches the fingerprint area on the display with a gloved hand, the touch may be registered but a preset threshold may indicate that the magnitude of the touch signal is too low for fingerprinting yet adequate for screen navigation. In such a scenario, touch system 112 may not engage the fingerprint sensor, reducing the amount of power consumed by not engaging the fingerprint sensor on every touch. In such an example, touches by a gloved finger may meet a minimum signal threshold to allow for screen navigation.

Accordingly, by leaving sensor array 116 off or in a low-power sleep mode when sensor images of an object are amenable to being unclear and turning sensor array 116 on when sensor images of the object are amenable to being clear, object detection system 110 may enable better power management of sensor system 114. In this way, the power demand of sensor system 114 may be reduced, and a higher probability of first-time scanning success ensured.

### B. Size Reduction

Sensor array 116 may be placed underneath a portion of the touch-sensitive screen (rather than underneath the entire touch-sensitive screen). With sensor array 116 coupled to the touch-sensitive screen, the size of sensor array 116 may be small while still providing for clear fingerprint imaging and other advantages, as discussed in the present disclosure. In an example, the active area of sensor array 116 may be on the order of ¼ inch x ½ inch. The touch-sensitive screen (e.g., a capacitive touchscreen) aids effective operation of a reduced size fingerprint sensor. For example, the touch-sensitive screen may detect the position of finger 204 on the surface of the touch-sensitive screen and aid in determining when the finger is positioned over the reduced-size fingerprint sensor.

The user may touch the active fingerprint area on the display. In an example, the user interface (UI) may display an outline of the touch area above the fingerprint sensor and provide a graphical guide for the user to position her finger in the correct location and/or orientation (e.g., see visual image 322 in FIG. 3). Touch system 112 may provide size parameters from the detected touch to the fingerprint control block 220. The touch size information may include details regarding which portion of the finger is being scanned (e.g., tip, middle, bottom, or side) and the size and position of the finger. As such, needless scanning of touches that are deemed to be too large or oddly shaped, such as a cheek, a palm, a shirtsleeve, or liquid on the screen may be avoided.

### C. Self-Calibration of Sensor Position

As part of the interaction between a reduced-size fingerprint sensor and a display with a touch-sensitive screen, it may be important to know the physical location of sensor array 116 with respect to the display. For example, it may be important to allow an application that is executing on mobile device 102 to know the location of sensor array 116 with respect to the display.

With placement variations and assembly tolerances between various mobile device models, it may be desirable to determine the location of sensor array 116 within each device. Some software applications running on the mobile device may request an authenticating touch input from the user. If the application does not know the location of sensor array 116, the application may be unable to acquire images from sensor array 116. In another example, if the application incorrectly knows the position of sensor array 116 in mobile device 102, the application may not be able to receive the user's touch input and may inadvertently hang or become dysfunctional.

In some embodiments, electromagnetic or electrostatic interactions between sensor array 116 and the touch-sensitive screen may be used to self-calibrate the sensor position and/or orientation after the sensor is attached to the display. For example, a transmitter or receiver electrode associated with sensor array 116 may be biased temporarily with an AC or DC signal to allow detection of the sensor by the touch-sensitive screen. The outline of the active portion of the sensor array may be used to determine the physical placement of the sensor. A software application may be able to run a routine to determine the location of sensor array 116 and to self-calibrate the touch-sensitive screen to the smaller sensor array 116.

In an example, sensor array 116 may be attached to the backside of a display and a touch-sensitive screen (e.g., projected capacitive touchscreen (PCT)) placed over and adhered to the display. To automatically determine the position of sensor array 116 with respect to the touch-sensitive screen, a bias voltage may be applied to one or more of the receiver (e.g., ultrasonic receiver) or transmitter (e.g., ultrasonic transmitter) electrodes. The bias voltage may be applied to the receiver or transmitter electrode closest to the touch-sensitive screen. One or more electrodes of sensor array 116 may be biased or injected with a time-varying signal that can be detected by the overlying capacitive touchscreen to verify aspects of sensor operation (during a sensor self-test procedure).

A scan of the touch-sensitive screen may be performed, and the active region of the sensor determined. Coordinates of the active sensor region may be determined and stored in memory 134 (e.g. areal calibration). The size of the active sensor area may also be stored in memory 134. Accordingly, the size, position, and orientation of sensor array 116 may be determined with respect to a capacitive touchscreen and stored in memory 134.

Software applications running on mobile device 102 may invoke the size, position, and/or orientation parameters to guide the user to a position on the screen where fingerprint images of the user's fingerprint may be captured. A virtual image may provide an example outline to the user of where to place her finger on the touch-sensitive screen (see visual image 322 in FIG. 3). Software applications may also invoke the size, position, and/or orientation parameters to allow the applications to detect biometric information from sensor array 116 when desired, compare coordinates from the touch-sensitive screen with stored sensor parameters to determine when an object is above the sensor, and/or enable other applications.

### V. Object Outline and Rotation

During enrollment using small area fingerprint sensors, multiple touches/taps may be requested for registering each desired finger. This may adversely affect the user's experience (e.g., excessive latency and repetitive touches/taps) and demands excessive computation. For example, the process of requesting that the user tap multiple times to record or register a fingerprint during enrollment may take up to 15 seconds or longer. Additionally, matching or authentication of a user can consume extensive compute resources and cause significant latency depending on the number of enrolled fingers or users. For example, the latency and processing for enrollment may take up to approximately 500 milliseconds for each enrollment image. The processing time grows linearly with the number of fingers and users, thus degrading the user's experience.

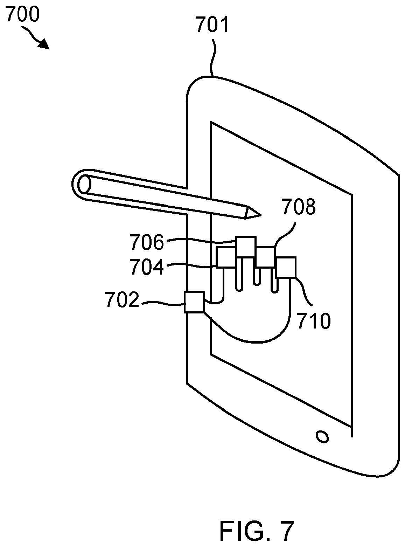

To reduce the amount of time to process a fingerprint image, the touch-sensitive screen may be used to detect an approximate finger outline and the region where the user touched. FIG. 7 is a block diagram 700 illustrating a mobile device 701 and imaging regions 702, 704, 706, 708, and 710, consistent with some embodiments. The user's fingerprint may be captured and analyzed based on the imaging regions. In some embodiments, the touch-sensitive screen may be a capacitive touchscreen that detects the location of the object's touch and an outline of the touched region. In some examples, the touch-sensitive screen may be a low-resolution capacitive touchscreen.

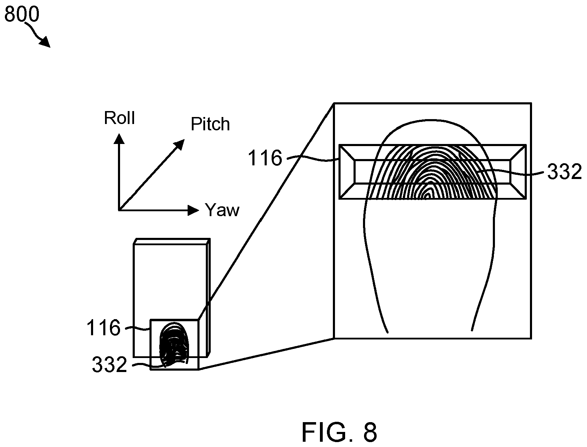

Sensor array 116 may see only a portion of the user's fingerprints, such as when the sensor array 116 has an active area that is smaller than the fingerprint, or when only a portion of the finger overlaps the active area of the sensor. FIG. 8 is a block diagram 800 illustrating sensor array 116 receiving an image of a portion of the user's fingerprint, consistent with some embodiments. In FIG. 8, sensor array 116 may be an ultrasonic sensor array that is fired to acquire one or more ultrasonic images of fingerprint 332, and sensor array 116 may capture one or more partial fingerprints. As illustrated in FIG. 8, an in-plane rotation is a rotation about the pitch axis. An out-of-plane rotation is a rotation about the yaw axis and/or rotation about the roll axis. A rotation of a finger about the pitch axis may require corrections for the rotation angle to accurately enroll and/or match a fingerprint image. Information from the touchscreen, even a low-resolution touchscreen, may be helpful in determining the rotation angle and subsequently help fingerprint enrollment and/or matching.

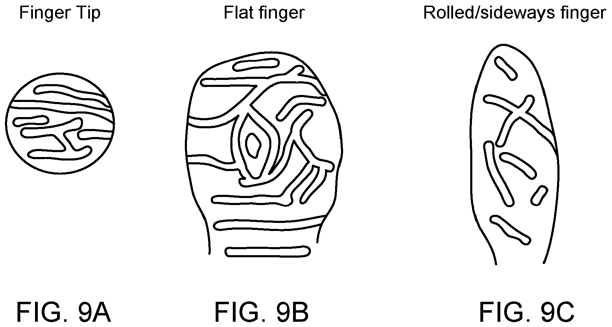

FIGs. 9A-9C show example fingerprints of portions of a finger, consistent with some embodiments. A finger outline may be used for identifying finger rotation. As shown in FIG. 9A, a tip of a finger touching the surface of a touch-sensitive screen may appear circular or elliptical with ridge-valley patterns inside (e.g., yaw angle is about 90 degrees with reference to FIG. 8). As shown in FIG. 9B, a fingerprint may be broad, indicating that a finger is placed essentially flat against the surface of the touchscreen (e.g., all three angles are about zero degrees with reference to FIG. 8). As shown in FIG. 9C, a "sideways" fingerprint having a narrow shape may indicate that the user has rolled her finger to one side or the other (e.g., roll angle is about 90 degrees with reference to FIG. 8).

As discussed in more detail below, the detected outline may be matched against a template as a first level of authentication and further used for selectively activating high-resolution fingerprint imaging. In some implementations, the outline of one or more finger outlines may be used as a primary or secondary biometric feature in a large-area multi-finger fingerprint sensor. For example, the finger outline result may further trigger a secondary authentication (e.g., ultrasonic fingerprint imaging) and/or biometric enhancement (e.g., liveness detection). Liveness detection detects physiological signs of life. Additionally, the finger outline may be used for enabling localized high resolution and/or insonification of finger positions on a large screen sensor, thus reducing power consumption and processor utilization. Insonification may refer to flooding an area or an object with controlled sound waves, typically as a part of sonar or ultrasound imaging. Accordingly, a multi-level authentication system can be performed with low latency, low processor utilization, and low power consumption.

The position and area of sensor array 116 may be associated with the finger outline to estimate the fingerprint contact area and position of the finger. In some embodiments, the finger outline may be used for template association. By using additional finger outline and/or rotation information from touch system 112, processing fingerprint image data from sensor system 114 may be accelerated (e.g., rotation, position and/or area).

Conventional touch-sensitive screens may image at about 10-20 dots per inch (dpi) whereas fingerprint sensors may image at about 500 dpi. In some embodiments, the touchscreen sensor may be used for determining a finger outline, which may be used to estimate finger rotation and positioning relative to sensor array 116. In an example, the outline and finger rotation/position information may be used for image template or feature template stitching in small-area sensor-based fingerprint enrollment procedures. Stored minutiae and/or fingerprint features from a single finger or a part of the finger may be referred to as a feature template, whereas detailed images of fingerprint ridges, valleys and other features may be referred to as an image template. The fingerprint capture area may be associated with a portion or area of the user's finger, palm or hand, in some cases.

Multiple enrollment images from a single finger may be stitched and/or stored to represent the finger. This representation of the finger may be called an image template. For example, touch system 112 may detect a user's fingertip outline (see FIG. 9A) on the surface of the touch-sensitive screen, and processing component 132 may store an image of the user's fingertip outline in memory. At a later point in time, touch system 112 may detect the user's flat finger outline (see FIG. 9B) on the surface of the touch-sensitive screen, and processing component 132 may store an image of the user's flat finger outline in memory. Processing component 132 may stitch these two images together to represent a portion of the user's finger that is larger and more complete than either the fingertip or the flat finger, using in part the finger or fingertip outlines stored in memory.

In an example, the touch system may determine an object outline based on detecting the object's touch on a surface of the touch-sensitive screen and determine a rotation of the object from the object outline. In such an example, processing component 132 may identify an image template based on the object outline and rotation, stitch together one or more images of the object with the identified image template, and form a new or updated image template based on the stitching. The image template may be a partial or full image of the object.

In some embodiments, features from the fingerprint images may be extracted and associated feature descriptors may be stored as a representation of the finger. This representation of the finger may be called a feature template. In an example, the touch system may create or determine an object outline based on detecting the object's touch on a surface of the touch-sensitive screen and determine a rotation of the object from the object outline. In such an example, processing component 132 may extract one or more features from the one or more captured images, identify a feature template based on the object outline, rotation and/or extracted features, and stitch one or more images of the object to form or enhance the feature template. Processing component 132 may then create or determine a new feature template based on the stitching. The feature template may be a partial or full image of the obj ect.

The template (e.g., image template or feature template) may be annotated with the finger outline, rotation, and position information to aid in future inquiries. During enrollment, the template(s) of the user's fingers(s) may be stored in a device-secure flash memory (e.g., a secure memory in a phone). In some embodiments, storing the template of the user's finger may be a one-time process. In some embodiments, the template of the user's finger may be updated during inquiries. Additionally, multiple-finger templates of one or more users may be stored in the device. When the user invokes the fingerprint authentication system (e.g., attempts to unlock the device), features of the current inquiry image may be matched with the templates and a match score may be computed. Based on the match score, the user may or may not be authenticated.

Additionally, user feedback regarding the enrollment process may be enhanced with the knowledge of rotation and position, thereby improving the user's experience (e.g., reducing the number of required touches and overall latency) and processor utilization. For example, the touchscreen-detected parameters may be used for enhancing the user's experience by providing useful feedback such as guiding the user and informing the user of progress (see action 226 in FIG. 2). During inquiries, the finger outline, and position and/or rotation may be extracted from the captured image. The inquiry outline may be matched with enrolled outline templates. The fingerprint templates, for matching, may be sorted according to outline matching scores and used to authenticate or verify an enrolled user.

In some embodiments, fingerprint template matching may be performed by matching outlines only. In an example, matching includes a correlation of two outline/silhouette images of an object (e.g., the user's finger, set of fingers, palm or hand). In another example, machine learning may be used to determine if the inquiry outline matches with the enrollment (template) outline. In such an example, the machine learning may be used for localizing templates for fingerprint matching purposes.

Further, the position and rotation for matching may be refined based on estimated parameters during the inquiry. As such, inquiry fingerprint features may be matched against selected or ordered templates. Upon a successful match, an early exit may occur, thus reducing authentication latency and minimizing hardware resource utilization. In large-area sensors, a low-resolution touch sensor may be used for detecting an initial touch and determining an outline of a finger, hand or palm, followed by selective image acquisition and image processing in the regions of interest with a high-resolution sensor array.

### A. Touch-Assisted Enrollment

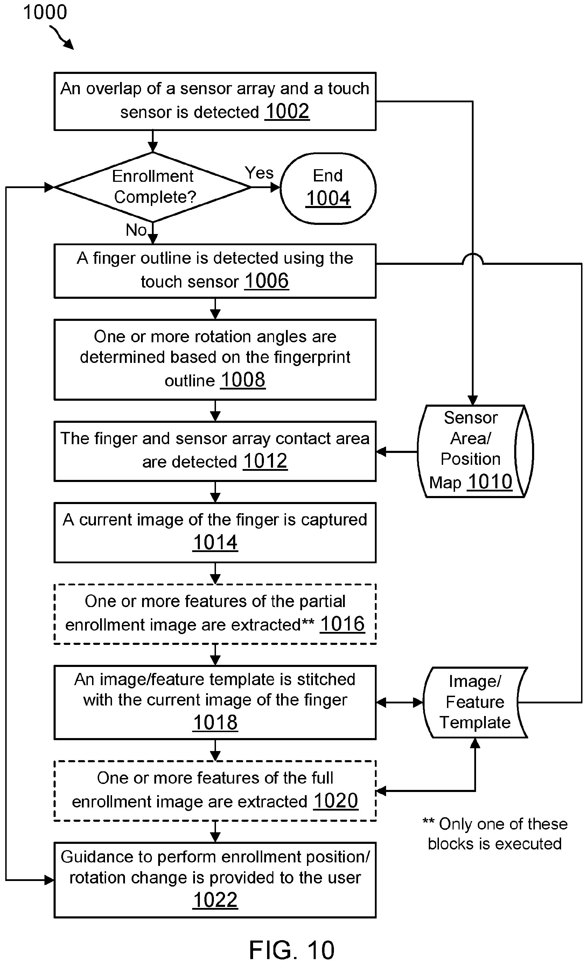

FIG. 10 is a flowchart illustrating a method 1000 of guiding a user to perform fingerprint enrollment and/or finger position or rotation change, consistent with some embodiments. Method 1000 is not meant to be limiting and may be used in other applications.

Method 1000 includes blocks 1002-1022. In a block 1002, an overlap between sensor array 116 and portions or all of a touch sensor may be detected. In an example, sensor array 116 may be an ultrasonic fingerprint sensor, and the touch sensor may be one or more capacitive sense channels incorporated into a touch-sensitive screen. The fingerprint sensor location may be detected and stored in memory 134. Block 1002 may be performed once per device.

If the fingerprint enrollment is finished, the process flow may proceed to a block 1004, in which the process may end. If the fingerprint enrollment is not finished, the process flow may proceed to a block 1006, in which a finger outline may be detected using the touch sensor. In a block 1008, one or more rotation angles may be determined based on the finger outline. In an example, processing component 132 may analyze the shape and area of the finger outline to determine the one or more rotation angles. The rotation angle may be, for example, an in-plane rotation about a pitch axis, an out-of-plane rotation about a yaw axis and/or rotation about a roll axis.

In a block 1010, the finger outline may be mapped to sensor array 116. In an example, signals from the touch sensor allow identification of coordinates for the finger outline, and processing component 132 may detect the overlap between the finger outline and the active area of sensor array 116. Block 1010 may hold or store in memory fingerprint sensor and touch sensor position information, such as fingerprint sensor coordinates and touch sensor coordinates. From block 1002, the fingerprint sensor position may be determined with respect to the touch sensor coordinates. Accordingly, the touch-derived outline and contact area of the finger may be translated to fingerprint sensor parameters and mapped onto sensor array 116.

In a block 1012, the finger and sensor array contact area may be detected. Processing component 132 may associate the capture area of the finger outline to an area of the finger that is captured in the one or more images (e.g., tip of finger). Processing component 132 may use the coordinates of the finger outline mapped to an area of sensor array 116 to detect the contact area. In a block 1014, a current image (e.g., ultrasonic image) of the finger may be captured. In an example, sensor array 116 may be an ultrasonic sensor array that is fired to acquire one or more ultrasonic images of the finger, and processing component 132 captures the one or more ultrasonic images of the finger.

Blocks 1016 and 1020 have dashed lines, indicating that at most one of these blocks may be executed for each flow from block 1014 to block 1022 of method 1000. If block 1016 is executed then block 1020 is not executed, and the process flow proceeds from block 1016 to block 1018 and then to block 1022. In a block 1016, one or more features of the image are extracted, where the image is a partial enrollment image of the finger. An example of a fingerprint feature is a fingerprint minutia, and examples of image features are edges and corners in the fingerprint image. In an example, features may be described using a histogram of gradients or various statistical parameters of a local block around the image feature. The descriptors may then be matched by a matching algorithm.

In a block 1018, an image template and/or feature template may be stitched together with the current image of the finger. External data such as one or more stored image templates or feature templates may be used for stitching with the current image. One or more images or features of the finger (or other object) may be stitched together with the stored image or feature template, and a new or updated image or feature template may be created or formed based on the stitching.

The conversion from a small area image to a full size image or feature template may be performed in a variety of ways. In one example, small area images may be stitched together using image registration techniques and one or more features of the stitched image may be extracted. In another example, one or more features of partial images may be extracted and the templates annotated and stitched together to create, determine or form another feature or image template. In another example, the captured fingerprint image may be annotated with the position and rotation angle information. The position and rotation angle information may be used for stitching the image or labeling/stitching the image template. Additionally, the finger outline, position, and area information may be tagged to the templates to aid in fast matching/inquiry.

In some implementations, the feature or image templates may not be stitched together. Rather, the templates may be ordered or otherwise numbered and stored for future inquiry, matching or authentication purposes. In some implementations, the touch sensor or touch-sensitive screen may aid when stitching templates, based on the known overlap area with respect to the fingerprint sensor. For example, a middle section of a flat finger (see Fig. 9B) may be positioned over the active area of a reduced-size fingerprint sensor. While sensor images from the fingerprint sensor may not directly reveal which portion of the finger is being imaged, touch information from the touch sensor or touch-sensitive screen may provide an overall outline of the finger, allowing a determination to be made on which part of the finger is being imaged and potentially reducing the processing time needed for enrollment or matching. In some implementations, the finger outline may provide template ordering, identification and association information. In some implementations, the finger outline may aid in determining and displaying enrollment progress. For example, fingerprint image information from the fingerprint sensor for scans completed during enrollment may be superimposed on the finger outline to determine which parts of the finger have been imaged and which parts have yet to be imaged. The finger outline with portions yet to be enrolled may be displayed to the user to aid in the enrollment process. In some implementations, the finger outline may be used to detect whether one or multiple fingers from being enrolled by the same user. The user may be informed that multiple fingers are being enrolled, for example, by using a graphical icon displayed on the mobile device. In some implementations, the enrollment of multiple fingers from a single user may be discouraged or not allowed.

From block 1018, process flow proceeds to block 1022, where guidance to perform enrollment position/rotation change may be provided to the user (see action 226 in FIG. 2). The position and rotation angle information may be used for guiding the end user with the fingerprint enrollment process (e.g., tap position, percentage progress, time remaining, etc.). Due to this enhanced messaging, user enrollment latency (and thus compute resource usage) may be minimized. The completed positions, area, and angle of the user may be determined along with the total area from the finger outline. From block 1022, the process flow may proceed to determine whether the enrollment is complete.

In contrast, if block 1020 is executed then block 1016 is not executed and process flow proceeds from block 1014 to blocks 1018-1022. In such an example, from block 1018, process flow proceeds to block 1020. In a block 1020, one or more features of the image may be extracted, where the image is a full enrollment image of the finger. The one or more features and/or images may be stored in memory. From block 1020, process flow proceeds to block 1022.

It is also understood that additional processes may be performed before, during, or after blocks 1002-1022 discussed above. It is also understood that one or more of the blocks of method 1000 described herein may be omitted, combined, or performed in a different sequence as desired. In an embodiment, method 1000 may be performed for any number of objects hovering over or in contact with a surface of the touch-sensitive screen (e.g., multiple fingers).

### B. Touch-Assisted Inquiry

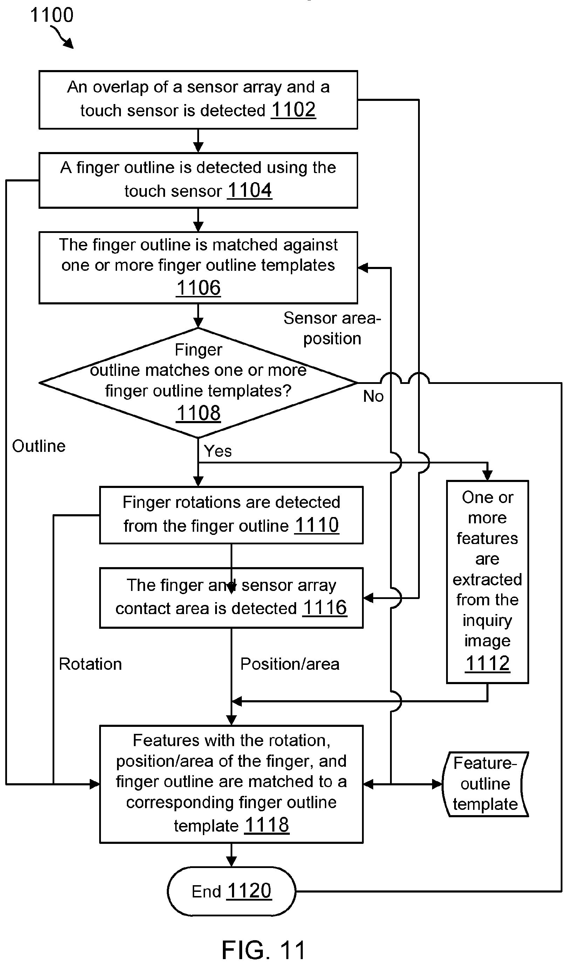

FIG. 11 is a flowchart illustrating a method 1100 of matching particular features and a finger outline with a corresponding image or feature template, consistent with some embodiments. Method 1100 is not meant to be limiting and may be used in other applications.

Method 1100 includes blocks 1102-1120. In a block 1102, an overlap between a sensor array 116 and portions or all of a touch sensor such as a touchscreen may be detected. In an example, sensor array 116 may be an ultrasonic fingerprint sensor, and the touch sensor may be one of one or more capacitive touch sensors, capacitive touch buttons, or capacitive sense channels incorporated into a touch-sensitive screen. The fingerprint sensor location may be detected and stored in memory 134. In some implementations, x-y coordinates of each corner associated with the perimeter of the active area of sensor array 116 with respect to the touch sensor may be detected and stored in memory 134. Block 1102 may be performed once per device (e.g., for each sensor array 116 and/or for each touch sensor (i.e., the capacitive touchscreen and each capacitive touch button) in a mobile device 102).

From block 1102, the process flow may proceed to a block 1104, where an outline of a finger may be detected using the touch sensor. From block 1104, the process flow may proceed to a block 1106 and a block 1118, described further below. In a block 1106, the finger outline may be matched against one or more stored finger outline templates (e.g., an image template or feature template associated with the finger outline). In an example, processing component 132 may attempt to match the finger outline against one or more finger outline templates obtained during a prior enrollment process. In a block 1108, it may be determined whether the finger outline matches one or more of the stored finger outline templates. In an example, the finger outline may be matched with a registered fingerprint database that may include registered finger outlines. The finger outline templates corresponding to the matching finger outlines may be selected for further analysis, such as fingerprint analysis of an acquired fingerprint image from the user.

If the finger outline is determined to not match any of the finger outline templates, the process flow may proceed to a block 1120, in which the process may end. If the finger outline is determined to match with one or more finger template outlines, the process flow may proceed to block 1110 and 1112. In a block 1110, finger rotations may be detected from the finger outline detected in block 1104. From block 1110, the process flow may proceed to a block 1116, in which the finger and sensor array contact area may be detected. From block 1110, the process flow may also proceed to block 1118, which is described further below.

From blocks 1116 and 1112, the process flow may proceed to a block 1118, in which features such as finger rotation, relative position of one or more fingers, contact area of the finger, and/or a finger outline are matched to a corresponding outline template (see block 1106). The finger position, rotation, and sensor array contact area may be estimated from the finger outline and the sensor array's relative position to the finger outline. Using the estimated rotation, position, contact area, and/or finger identifier, the features, obtained from the inquiry finger image, may be matched against the corresponding outline template. As a fallback, other templates may be searched if the outline-based templates that have been preliminarily identified fail to find a match. Template information for one or more fingers of a single user or of multiple users may be stored in memory of a mobile device. Additionally, each finger may have subparts captured by the fingerprint sensor. Furthermore, the templates may be prioritized for search/matching based on an outline matching score to reduce latency.

In some implementations, finger identification may be determined based on the finger outline or the finger area. Finger identification may include which finger of a hand is being asserted, the relative position between the fingers, and/or finger area (e.g., size of a finger or the contact area between various joints of the finger or hand). Finger identification may help to narrow fingerprint searching and matching. Alternatively, the finger outline may help identify or initially select which fingerprint image or feature templates to search. For example, the finger outline may be used to determine an offset angle between inquiry and enrollment images to aid in searching and matching. In some implementations, the finger outline or area may allow low-level verification. From block 1118, the process flow may proceed to block 1120, in which the process ends.

It is also understood that additional processes may be performed before, during, or after blocks 1102-1120 discussed above. It is also understood that one or more of the blocks of method 1100 described herein may be omitted, combined, or performed in a different sequence as desired. In an embodiment, method 1100 may be performed for any number of objects hovering over or in contact with a surface of the touch-sensitive screen (e.g., multiple fingers).

Although object 104 in FIG. 1 and object 204 in FIG. 2 are illustrated as being a user's finger, in alternative examples, the object may be any physical object that is capable of interacting with the touch-sensitive screen. In alternative examples, the object may be a stylus.

Referring again to FIG. 2, sensor system 114 may be configured to detect a non-finger object such as a stylus. In some alternative examples sensor system 114 may determine that object 104 is a stylus and not a finger. For example, sensor system 114 may be an ultrasonic sensor array that is fired to acquire one or more ultrasonic images, and processing component 132 may, based on the signal strength and patterns of the reflected ultrasonic waves from the object, determine that the object is not a finger and may further be able to determine that the object is a stylus based on an approximate width, length, diameter, or generally circular or elliptical shape associated with the image.

In response to determining that the object is a stylus, sensor system 114 may recognize that it is detecting and being touched by a stylus and reconfigure the touch-sensitive screen for optimal sensing of the object. For example, main PCB 320 or a controller associated with the touchscreen may increase the sample rate, resulting in a higher dynamic resolution on the screen. That is, an increased sampling rate allows faster detection and response to movements of an object such as a stylus on a surface of the touchscreen, increasing the speed at which the touch system can follow a rapidly moving stylus, finger or other object on the touchscreen.

The user may touch a portion of the touch-sensitive screen that overlaps with sensor array 116. In an example, a user may touch the overlapping portion (the portion of the touch-sensitive screen overlapping with sensor array 116) with a tip of a stylus, an image may be obtained of the stylus tip, the sensor system 114 may determine that the object is a stylus, and the touch-sensitive screen may be reconfigured to accommodate the stylus based on the stylus determination. For example, the sample rate, gain, touch thresholds, and filter settings associated with a stylus mode of the particular tip may be applied to the touchscreen via the touch system 112. The sample rate for the touchscreen may be increased by more rapidly accessing the various rows and columns of the touch-sensitive screen, allowing faster acquisition of data and the ability to track a quickly moving stylus across the surface of the touchscreen.

Alternatively, a limited portion of the rows and columns associated with the touchscreen may be accessed, allowing an increased frame rate in an area of interest (e.g., in the vicinity of the stylus tip). The gain associated with one or more channels of the touchscreen may be increased when the detected object is determined to be a stylus, as the area (and signal) associated with the tip of a stylus is generally much smaller than the area (and signal) of a finger touching the touchscreen. For example, an amplification factor may be increased for corresponding capacitive sense channels when attempting to detect the presence of a small-area object on or near the surface of the touchscreen.

Alternatively, a threshold for detecting an object may be lowered when the detection of a stylus tip is anticipated, compared to the threshold for detecting a larger object such as a finger, since the sensed signal for a small object is generally smaller than the sensed signal for a large object. Various filter settings (e.g., electronic filters or image-processing filters) may be adjusted to accommodate the detection of a stylus tip, such as a software filter that recognizes a small-area object. A low-pass spatial filter may be used, for example, when detecting the presence of a finger to reduce or eliminate the higher spatial frequencies associated with dust, small scratches or debris on the surface of the touchscreen. Allowance for increasing the roll-off frequency of the low-pass filter to allow detection of the spatial frequencies associated with a stylus tip may be incorporated into the touch system 112.

Alternatively, a band-pass filter centered in a region of interest around the approximate spatial frequency of a stylus tip may be incorporated into the touch system 112. Similarly, a high-pass filter that passes the spatial frequencies associated with a stylus tip rather than the lower spatial frequencies associated with a finger may be incorporated into the touch system 112. The sample rate, gain, touch thresholds, and filter settings associated with a stylus mode may be further adjusted to accommodate a particular style of stylus tip.

In another example, the user may touch the overlapping portion with a blunt tip of a stylus. In such an example, the touch-sensitive screen may be reconfigured for the sample rate, gain, touch thresholds, and filter settings associated with a "blunt tip" stylus mode after detection of the stylus by the sensor array 116 and determination of the stylus characteristics by sensor system 114. A blunt tip may exemplify, for example, a larger marker tip, a soft or compliable marker tip, or an angled rectangular marker tip. In another example, the user may touch the overlapping portion with a fine tip of a stylus. In such an example, the touch-sensitive screen may be reconfigured for the sample rate, gain, touch thresholds, and filter settings associated with a "fine tip" stylus mode after detection of the stylus by the sensor array 116 and determination of the stylus characteristics by sensor system 114. A fine tip may exemplify, for example, a smaller marker tip or a small-radius tip of a ball-point pen or pencil.

In another example, a user may touch an overlapping portion of the touchscreen and sensor array with an object such as an acoustic information tag. The acoustic information tag may contain an acoustic signature or other acoustic identifier. For example, the acoustic tag may contain an acoustic version of a one-dimensional or two-dimensional barcode, such as a UPC bar code, a QR code, or other information-carrying code. Alternatively, the acoustic information tag may contain an acoustic identifier such as a personalized insignia, signature, mark, emblem or tattoo. For example, a set of detents or raised surfaces (e.g. embossments) on the acoustic tag may be detected with an underlying ultrasonic sensor. The raised regions may pass or transmit more acoustic energy when in contact with the surface of the touchscreen, cover glass, cover lens or platen overlying the ultrasonic sensor relative to intervening regions of air or other acoustic-mismatched material disposed between the raised regions. The acoustic information tag may be recognized by the mobile device 102. The tag may be detected by the touchscreen and then imaged by an underlying ultrasonic sensor array 116. The acoustic tag may enable an action to occur (e.g., providing a coupon, delivering an advertisement, tracking a piece of equipment, identify a person, etc.). In such an example, processing component 132 may identify the acoustic information tag or acoustic identifier and cause the action to occur.

Additionally, mobile device 102 may have one or more touch buttons that are not located on or part of the touch-sensitive screen that is above an active area of a visual display. In an example, a touch button may be a capacitive-sense touch button including a capacitive electrode that is mounted or positioned outside the periphery of the active display area. In some alternative examples, sensor array 116 may be located underneath one or more of the peripheral touch buttons. The touch button may be, for example, a home, menu or back button that is positioned at the bottom of mobile device 102. Processing component 132, which interacts with sensor system 114, may also manage the touch buttons such that the touch button feeds data into sensor array 116. For example, a capacitive touch-screen button with an underlying ultrasonic sensor array 116 may use data from the capacitive touch-screen button to determine when an object such as a finger is sufficiently over the sensor array 116, then activate the sensor array 116 to acquire one or more images of the finger. In some implementations, the sensor array 116 may not be positioned directly underneath an active part of the display, yet may be peripheral to the display while still sharing a common cover glass.

When the user touches the touch button, the user may also be touching (or hovering over) sensor array 116, which is in close proximity to the touch button. In such an example, sensor array 116 may be fired to acquire one or more ultrasonic images of the object. For example, the touch button may perform action 210 (in FIG. 1) and process the touch data to enroll, verify or authenticate the user, or perform another action.

### VI. Multi-Finger Authentication

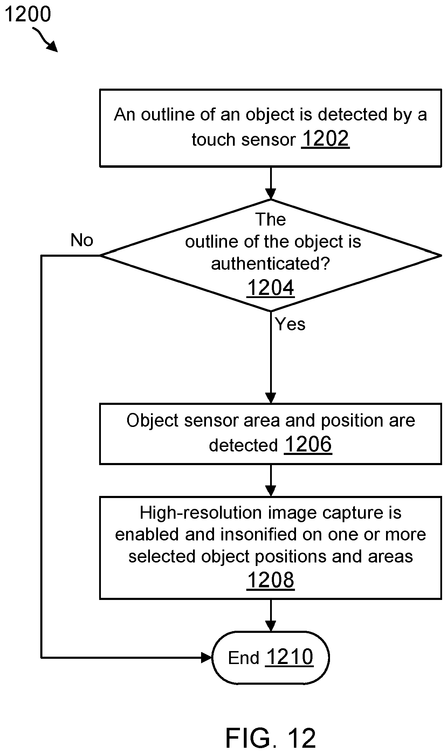

FIG. 12 is a flowchart illustrating a method 1200 of authenticating a multi-finger touch, consistent with some embodiments. FIG. 12 also represents a flowchart illustrating a method of insonifying one or more positions and/or areas of a touch-sensitive screen, consistent with some embodiments. Method 1200 is not meant to be limiting and may be used in other applications. FIGs. 7 and 12 are discussed together below to better explain multi-finger touch authentication. FIG. 7 includes an example of a large-area fingerprint sensor, consistent with some embodiments. In an example, mobile device 701 includes a large area sensor for multi-finger recognition and a relatively low-resolution touch-sensitive screen (e.g., 10 dpi).

Method 1200 includes blocks 1202-1210. In a block 1202, an outline of an object may be detected by a touch sensor. In an example, the object is a finger of a user, and touch system 112 detects an outline of the user's finger on the surface of the touch-sensitive screen. Mobile device 701 may include a low-power touchscreen sensor that is used to detect an initial touch and finger outline.

In a block 1204, the outline of the object may be authenticated. In an example, output from a low- or intermediate-resolution capacitive sensor in the touch-sensitive screen may be used to authenticate the outline of the object. In an example, the object may be a hand, finger or palm, and the low- or intermediate-resolution authentication may use a 10-50 dpi touch-sensitive screen to authenticate the outline. If the outline of the object fails authentication, the process flow may proceed to a block 1210 in which the process ends. If the outline of the object is authenticated, the process flow may proceed to a block 1206, where an area and position of the object may be detected. In another embodiment, authentication is equivalent to detection, such that touch system 112 is detecting for a finger without any specificity as to the identity of the user. In this embodiment, any object matching a profile (e.g., shape, aspect ratio, etc.) for a finger will be authenticated.

The single- or multi-finger/hand outline may be used for triggering a second authentication level using more detailed features of the object. For example, a high-level authentication effort may be attempted only after an outline of a user's finger, palm or hand has passed an initial low-level authentication effort based on signals from the touchscreen to avoid the power, time and computing resources generally needed for high-level authentication. Alternatively, a low-resolution outline of a finger, palm or hand may provide approximate location on the touchscreen of the finger, palm or hand for further high-resolution detection. In an example, the touch-sensitive screen may detect the area and position of the multiple fingers simultaneously touching the surface of the touchscreen, as shown by imaging regions 702-710 in FIG. 7.

From block 1206, the process flow may proceed to a block 1208, where a high-resolution image capture is enabled on one or more selected object positions and areas on the touchscreen are insonified. For example, the finger outline may be used for selective insonification (e.g., emit/capture ultrasonic fingerprint image on selective areas) corresponding to imaging regions 702-710 in FIG. 7. It may be unnecessary for sensing system 114 to process the whole screen of mobile device 701 because touch system 112 has detected the area and position of the touch. In particular, imaging regions 702-710 may indicate the touch area and the insonification may be limited to these touch areas, thus saving power because it may be unnecessary to insonify the whole touch area. For example, sensor array 116 may be an ultrasonic sensor array that fires ultrasonic waves in the detected touch areas (e.g., indicated by imaging regions 702-710) and processing component 132 may acquire the ultrasonic images.

Accordingly, a two-level fingerprint authentication system may authenticate at a first authentication level via a low- or intermediate-resolution capacitive sensing and authenticate at a second level via high-resolution ultrasonic fingerprint sensing. The first authentication level may use the finger outline to authenticate the fingerprint at a low level. The second authentication level may be "woken up" based on whether the fingerprint passed the first authentication level. In an example, the second authentication level is triggered only if the first authentication level requires the enablement of high-resolution ultrasound-based liveness and/or fingerprint verification. Although ultrasonic technology has been used as an example, it should be understood that other technologies are within the scope of the disclosure (e.g., capacitive, optical, RF, IR, or FSR technologies) for liveness detection and fingerprint imaging.

It is also understood that additional processes may be performed before, during, or after blocks 1202-1210 as discussed above. It is also understood that one or more of the blocks of method 1200 described herein may be omitted, combined, or performed in a different sequence as desired. In some embodiments, method 1200 may be performed for any number of objects hovering over or touching the touch-sensitive screen (e.g., multiple fingers). In some embodiments, the second authentication level may be used as a backup to the first authentication level. For example, if the first authentication level fails to acquire an adequate sensor image of the object, the second authentication level may be used to acquire a more detailed sensor image of the object and authenticate the user.

### VII. Liveness Detection

In some embodiments, the second authentication level may be used to detect liveness using sub-surface imaging (e.g., from ultrasonic or IR waves). While sensors (e.g., ultrasonic fingerprint sensors) can be effective in verifying and validating a user, spoofing such a system with artificially created fingers or fingerprint patterns remains a concern. An ultrasonic probe may be positioned on the surface of an ultrasonic fingerprint-enabled display to detect firings of an ultrasonic transmitter associated with an ultrasonic sensor array as a finger is placed on the display surface, while a capacitance probe may be used to determine stimulus of electrodes that may be used for liveness detection. The "liveness" of the finger may be detected using the touch-sensitive screen by, for example, recognizing capacitance variations with the perfusion of blood on the tip of the finger.

As discussed, a PCT touchscreen positioned above a display may be coupled to a sensor array (e.g., ultrasonic sensor array) that is positioned below a portion of the display. In some embodiments, select electrodes (e.g., capacitive electrodes) on, incorporated into, or otherwise included with the PCT touchscreen or the ultrasonic sensor array may be stimulated to detect changes in permittivity (eᵣ(t)) with respect to time of a finger positioned on the display above the fingerprint sensor that can detect heart rate or liveness of the finger. The "eᵣ" may be referred to as relative permittivity and is normalized to free space permittivity, which may be referred to as "eo." The electrodes may be used to detect heart rate or liveness by injecting a signal into one or more of the selected electrodes. As blood flows through the body, the amount of blood with respect to other biological tissues varies, going up and down and changing the electrical characteristics (e.g., electrical impedance) of the body portion in contact with the touchscreen.

As permittivity changes, one or more signals may be injected into select electrodes that are part of the touch-sensitive screen (e.g., column or row electrodes) or sensor array in order to detect the slight changes in capacitance that occur with the pulsing of blood into the finger. For example, small electrical signals in the tens of kilohertz to tens of megahertz range may be injected into one of the electrodes, and the corresponding signal detected at another of the electrodes. The capacitive coupling between the first and second electrodes may be determined in part by the permittivity of the object in proximity to or touching the electrodes. The effective permittivity may vary with the proportion of blood in the finger region and may be correlated with blood pressure pulses. The capacitance is typically proportional to the effective permittivity, which may correlate to the amount of blood in the finger at a particular point in time. As the perfusion of larger and smaller amounts of blood with the user's beating heart changes the effective permittivity of the finger, capturing and filtering time-domain signals from the selected electrodes allows determination of liveness by detecting the beating heart. The liveness detection method may be applied before, after, or while acquiring fingerprint image data (e.g., ultrasonic fingerprint image data), to add an important component of liveness to user validation and reduce the ability to spoof the authentication system.

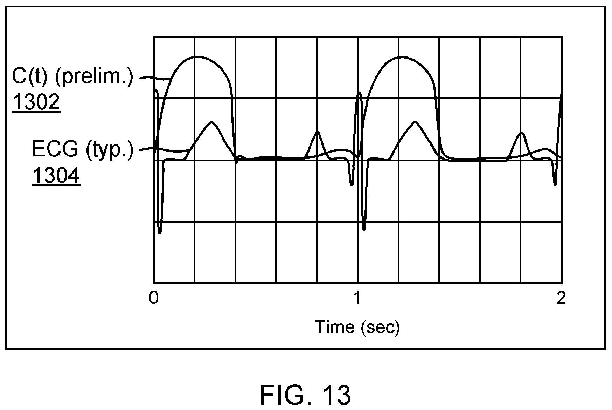

FIG. 13 shows a chart including an electrocardiogram (ECG) signal and a line graph representing ventricular pressure associated with finger 204, consistent with some embodiments. The chart includes an electrocardiogram (ECG) signal 1302, which is a representative signal of electrical impulses or potentials that are received from electrodes placed in or around the chest while the heart pumps. With each heartbeat, an electrical signal spreads from the top of the heart to the bottom. As it travels, the signal causes the heart to contract and pump blood. The process repeats with each new heartbeat.

A capacitance against time signal 1304 represents the ventricular pressure of a user against time (arbitrary units with approximately 1-2 Hz heart rate). Although ventricular pressure is illustrated, it should be understood that this is illustrative and not intended to be limiting and other types of biological pressure may be detected and used to determine liveness. For example, atrial and/or aortic pressure may be used. Additionally, the user's pulse may be detected.

The user may interact with capacitive pulse-detection electrodes associated with the sensor array (e.g., on the touchscreen, sensor array, or periphery of the touchscreen or sensor array). Referring back to FIG. 2, action 222 may also include pulse or liveness detection using the capacitive electrodes and action 228 may include pulse or liveness determination. An output of action 228 may be the pulse detection of finger 204. For example, to aid in detecting the capacitance against time signal 1304, the controlled excitation frequency of selected capacitive sense channels (e.g., rows or columns) of a PCT touchscreen or dedicated capacitive electrodes on sensor array 116 may be used.

The capacitance against time signal 1304 may be filtered to extract liveness information. The capacitance against time signal 1304 may be determined using one or more liveness signal injection frequencies (e.g. in a range between about 10 kHz and 100 MHz), to detect changes in permittivity or capacitance with pulse as a function of excitation frequency (i.e. effective impedance as a function of frequency). To extract liveness information, the capacitance against time signal 1304 may be pre-filtered and Fast Fourier Transform (FFT) analysis may be performed on the capacitance against time signal 1304. For example, the liveness detection signal may be filtered with a low-pass filter to filter out high-frequency noise from normal operation of the touchscreen or to filter out the injected liveness detection signal. The FFT may reveal the content of the liveness signal in the approximately 1-2 Hz range, indicative of a human heartbeat. Lack of a signal above a liveness detection threshold in the approximately 1-2 Hz range may indicate that the object being detected and/or authenticated is not live. To ensure proper liveness detection, it may be desirable that the user's finger be resident at the same location on the touch-sensitive screen for about 1-2 pulses of the heart.

In some embodiments, particular electrodes of a PCT touchscreen may be used to detect heart rate pulses, and an underlying sensor system 114 (e.g., ultrasonic biometric sensor) may be used to acquire fingerprint image information. The fingerprint image information may be used to identify or otherwise verify the user, and the heartrate information may be used to ascertain liveness of the user and diminish spoofing. In an example, sensor system 114 is an ultrasonic fingerprint system, and the user may place a finger 204 on a touchscreen above the ultrasonic fingerprint sensor. In response to the touch screen detecting the placement of the finger, the ultrasonic sensor may be fired to acquire an ultrasonic fingerprint image, and particular electrodes of the PCT touchscreen or the sensor array may be excited and sampled to acquire pulse information associated with the finger.

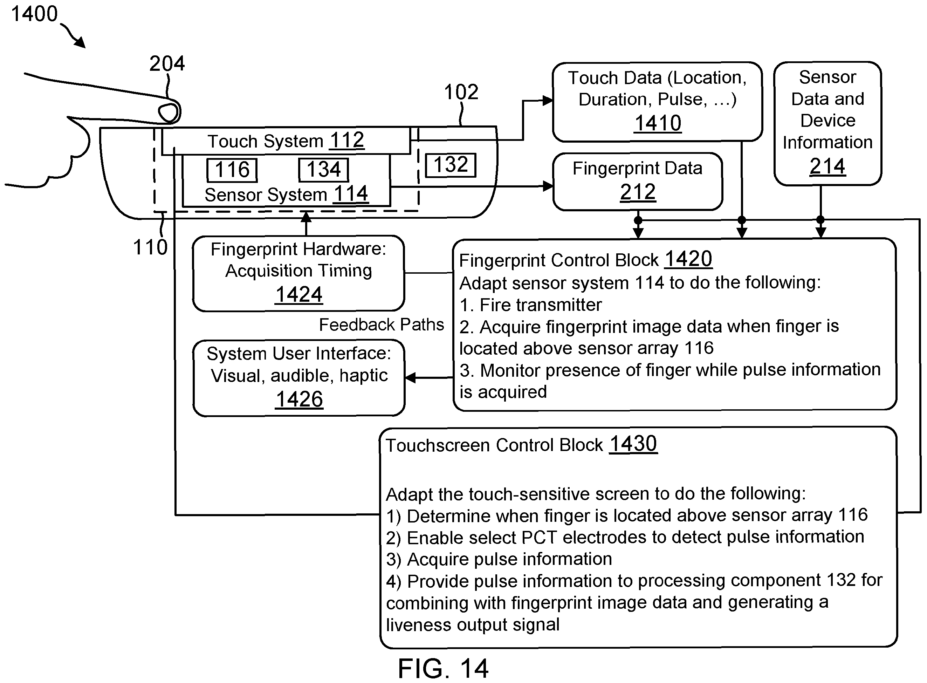

FIG. 14 is a block diagram 1400 illustrating a process flow using an object detection system for detecting liveness using a sensor array and an adapted PCT touchscreen, consistent with some embodiments. In FIG. 14, finger 204 may be in contact with the touch-sensitive screen and/or display. FIG. 14 includes action 212, in which sensor system 114 receives and processes fingerprint data, and action 214, in which sensor data and/or device status information may be retrieved and processed. At an action 1410, touch system 112 may receive and process touch data including one or more touch parameters from the user's touch. The one or more parameters may include the position of finger 204 with respect to a touch-sensitive screen and visual display of mobile device 102, the speed and direction of any movements of finger 204 with respect to the touch-sensitive screen, pulse or liveness information associated with finger 204, and duration in which finger 204 is touching the touch-sensitive screen, among other touch data. In some implementations, a touch parameter may include the number of fingers (e.g., one to five fingers of a user's hand) that are touching the touch-sensitive screen of the mobile device 102.

At an action 1420, the fingerprint control block may receive an output of actions 212, 1410, and/or 214, and object detection system 110 may process the inputs. In an example, sensor array 116 may fire one or more transmitters, and processing component 132 may acquire fingerprint image data when finger 204 is located above sensor array 116. The processing component 132 may monitor the presence of the finger while pulse information is acquired, to insure that no substantive movement of the finger has occurred and that the finger remains in contact with the surface of the touchscreen. At an action 1424, acquisition timing may be determined and used as an input into sensor system 114. Additionally, at an action 1426, visual, audio, and haptic feedback may be provided to the user.

At an action 1430, the touch-sensitive screen may perform actions such as determining when finger 204 is located above sensor array 116, enabling select PCT electrodes to detect pulse information associated with finger 204, acquiring pulse information associated with finger 204, and providing pulse information to processing component 132 for combining with the fingerprint image data and generating a liveness output signal (e.g., capacitance against time signal 1304 in FIG. 13 at one or more liveness signal injection frequencies). An output of action 1430 may be used as an input into touch system 112.

In some alternative examples, the electrodes used to detect the user's pulse may be arranged in a column and row structure. In some examples, one, some or all of the rows and columns of a PCT touchscreen may serve additionally as electrodes for detecting the user's pulse. In some examples, dedicated pulse-detection electrodes may be included with the touch-sensitive screen or with a fingerprint sensor array 116 of the sensor system 114. As discussed, signals may be injected into a particular row and column of the structure to stimulate one or more electrodes for liveness detection. If the same electrodes are being used to scan the user's finger for acquisition of an image of the finger, it may be desirable to not interfere with the scanning operation of the particular row(s) and column(s) of the structure. In one example, to overcome this interference, operation of the scanning may be suspended during the liveness detection and resumed after the liveness detection. In another example, the injected liveness detection signal may be capacitively coupled to select row(s) and column(s) of the structure at a frequency or frequencies removed from normal PCT touchscreen operation. In another example, selective filtering may be performed to filter out whether a pulse is detected in a particular set of interacting or overlapping electrodes or whether an object is detected to determine whether an object is above or touching the touch-sensitive screen.

In some alternative examples, capacitive electrodes at the perimeter of sensor array 114 may be used to detect heart rate or liveness while the sensor array acquires a fingerprint image. The fingerprint image information may be used to identify or verify the user, and the heart-rate information may be used to determine liveness of the user to diminish spoofing. The capacitive electrodes included with the fingerprint sensor (e.g., not electrodes associated with an overlying touch-sensitive screen) may allow permittivity or impedance variations with heart rate to be detected while acquiring fingerprint information.

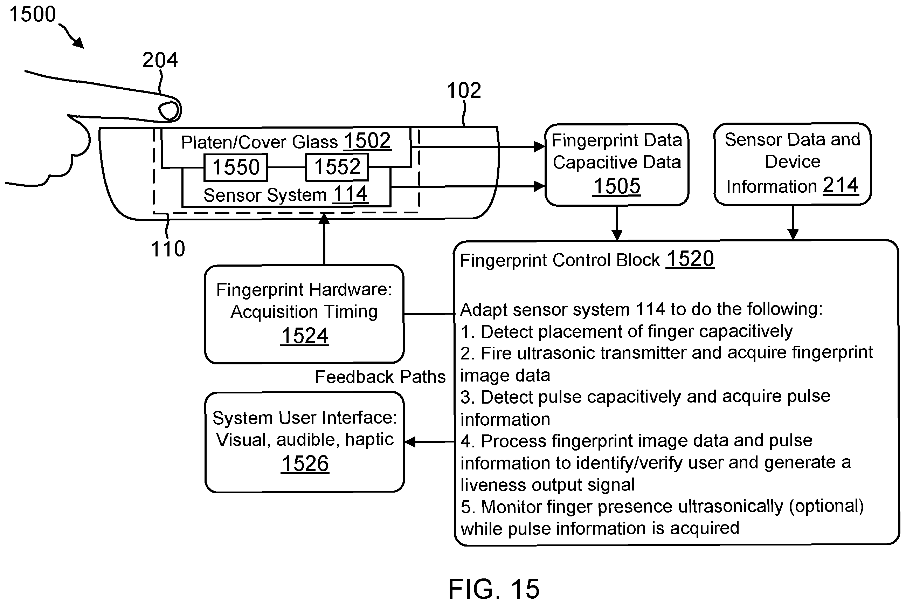

FIG. 15 is a block diagram 1500 illustrating a process flow using an object detection system for detecting liveness using a sensor array with peripheral capacitive sense electrodes according to some alternative examples. In FIG. 15, mobile device 102 includes a platen or cover glass 1502 and sensor system 114. Peripheral capacitance electrodes 1550 and 1552 may be located at a perimeter of sensor array 116 (not illustrated in FIG. 15) and used to detect a pulse associated with finger 204. In an example, sensor system 114 is an ultrasonic sensor system, and the user may place a finger on an ultrasonic sensor array (with or without a cover glass). Capacitance electrodes 1550 and 1552 near the periphery of the sensor array may detect the pulse of the user while processing component 132 acquires an ultrasonic fingerprint image.

At an action 1505, fingerprint data and capacitive data may be captured and processed. At an action 1520, the fingerprint control block may receive an output of actions 1505 and/or 214, and object detection system 110 may process the inputs. In an example, capacitance electrodes 1550 and 1552 may detect the placement of the finger capacitively, sensor array 116 (not shown in FIG. 15) in sensor system 114 fires one or more ultrasonic transmitters, and processing component 132 acquires the fingerprint image data.

Capacitance electrodes 1550 and 1552 may detect the pulse associated with finger 204 capacitively, and processing component 132 may acquire the pulse information. Processing component 132 may process the fingerprint image data and pulse information to identify or verify the user and to generate a liveness output signal. Additionally, processing component 132 may monitor the finger presence ultrasonically while the pulse information is being acquired via capacitance electrodes 1550 and 1552. Alternatively, processing component 132 may monitor the finger presence via capacitive electrodes 1550 and 1552 while fingerprint image data is being acquired ultrasonically.

In some embodiments, segmented bias electrodes on the upper layers of the sensor array may be used to detect heart rate or liveness while processing component 132 acquires a fingerprint image. The fingerprint image information may be used to identify or verify a user, and the heart-rate information may be used to determine liveness. For example, segmented bias electrodes on the upper layers of an ultrasonic sensor array 116 may be used to detect heart rate and/or liveness while the sensor array 116 acquires a fingerprint image ultrasonically.

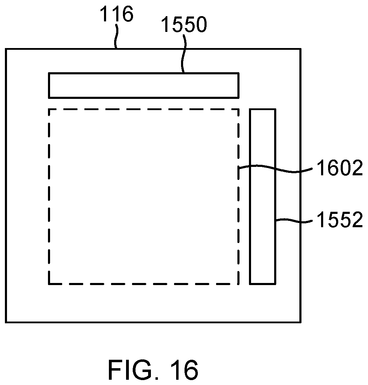

FIG. 16 is a block diagram illustrating a plan view of sensor array 116 with peripheral capacitive sense electrodes, according to some alternative examples. Sensor array 116 may include an active area 1602 where sensor images of a fingerprint or other object may be acquired, and peripheral capacitance electrodes 1550 and 1552 that may be used to detect heart rate, pulse and/or liveness. Capacitive sense electrode 1550 and/or 1552 may serve as a capacitive touch sensor, which may be used for detecting a touch by an object prior to waking up sensor array 116. For example, when sensor array 116 is operating in a low-power mode, a touch by an object such as a finger on or near sense electrode 1550 and/or 1552 may be detected with a capacitive sense channel AFE in coordination with processing component 132. After detection of the touch, processing component 132 may wake up the fingerprint sensor array and initiate an image acquisition cycle to capture a sensor image.

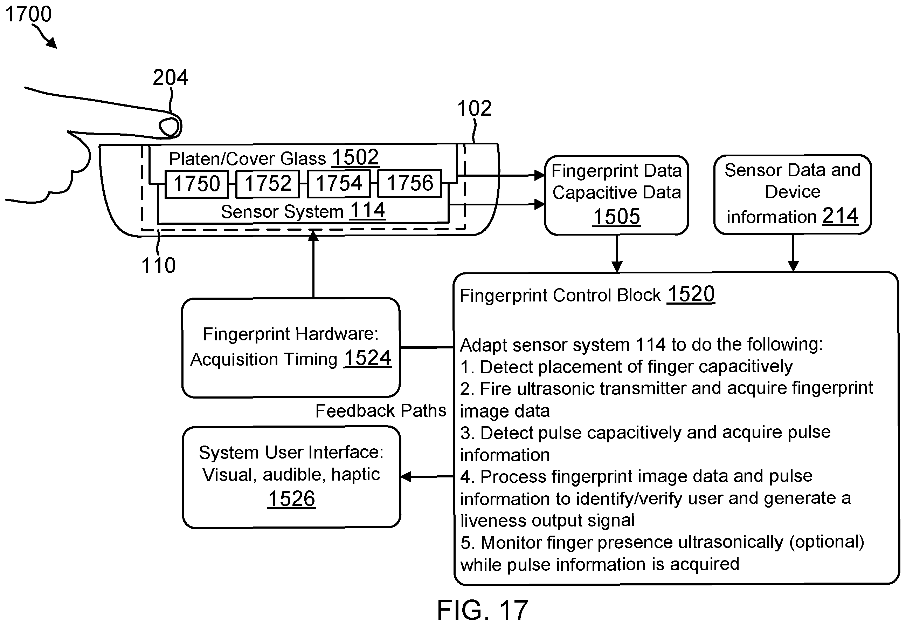

FIG. 17 is a block diagram 1700 illustrating a process flow using segmented bias electrodes 1750, 1752, 1754, and 1756 on the upper layers of the sensor array, consistent with some embodiments. In FIG. 17, mobile device 102 includes a platen or cover glass 1502 and sensor system 114. The upper electrodes of the sensor (e.g., receiver bias or "RBIAS" electrodes 1750, 1752, 1754, and 1756) may be segmented to allow capacitive detection of the heart rate while ultrasonic image information is acquired. In an example, sensor system 114 may be an ultrasonic sensor system, and the user may place a finger on the ultrasonic sensor array (with or without a cover glass). In this example, the segmented bias electrodes above the piezoelectric receiver layer of the sensor array may detect the pulse of the user while an ultrasonic fingerprint image is acquired. In some implementations, an ultrasonic fingerprint image may be acquired and processed while the pulse is being detected. In some implementations, an ultrasonic fingerprint image may be acquired, processed, and an authentication or verification determination made before liveness is checked, to eliminate the time required to determine liveness when an unauthorized user is attempting to gain access to the mobile device 102.

### VIII. Example Computing System

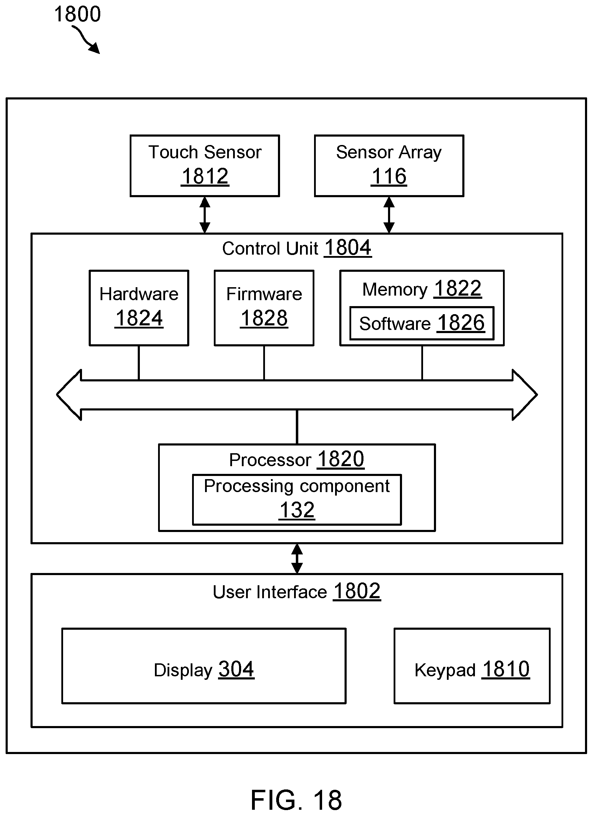

FIG. 18 is a diagram illustrating a platform 1800 capable of capturing one or more sensor images of an object, consistent with some embodiments. As discussed above and further emphasized here, FIGs. 1-18 are merely examples that should not unduly limit the scope of the claims.

A computing device may run platform 1800, which may include a user interface 1802 that is in communication with a control unit 1804, e.g., control unit may 1804 accept data from and controls user interface 1802. User interface 1802 may include display 304, which includes a means for displaying graphics, text, and images, such as an LCD or OLED display.

User interface 1802 may further include a keypad 1810 or other input device through which the user can input information into platform 1800. If desired, keypad 1810 may be obviated by integrating a virtual keypad into display 304. It should be understood that with some configurations platform 1800 or portions of user interface 1802 may be physically separated from control unit 1804 and connected to control unit 1804 via cables or wirelessly, for example, in a Bluetooth headset. Touch sensor 1812 may be used as part of user interface 1802 by detecting an object that is touching a surface of the touch-sensitive screen. Touch sensor 1812 may be, for example, a capacitive touch sensor such as a PCT touchscreen or dedicated capacitive electrodes on a portion of the touchscreen or a sensor array 116.

Object detection system 110 may detect an object and capture one or more ultrasonic images of the object. Control unit 1804 may accept and process data from user interface 1802, touch sensor 1812, and sensor array 116. Platform 1800 may include means for detecting signals (e.g., ultrasonic, optical or IR signals) reflected from an object with respect to a touch-sensitive screen of a device. Platform 1800 may further include means for capturing one or more sensor images of the object based on the reflected signals. When an object is located above the means for capturing the one or more images, the object may be located above at least a portion of the touch-sensitive screen.

Control unit 1804 may include one or more processors 1820 and associated memory 1822, hardware 1824, software 1826, and firmware 1828. Control unit 1804 may include means for controlling object detection system 110. Components of object detection system 110 may be included in processor 1820, memory 1822, hardware 1824, firmware 1828, or software 1826, e.g., computer readable media stored in memory 1822 (e.g., methods 600, 1000, 1100, and 1200) and executed by processor 1820, or a combination thereof. Processor 1820 may correspond to processing component 132 and execute instructions to capture one or more sensor images of objects. In an example, processing component 132 may capture ultrasonic images of objects.

It will also be understood as used herein that processor 1820 can, but need not necessarily include, one or more microprocessors, embedded processors, controllers, application specific integrated circuits (ASICs), digital signal processors (DSPs), graphics processing units (GPUs), and the like. The term processor is intended to describe the functions implemented by the system rather than specific hardware. Moreover, as used herein the term "memory" refers to any type of computer storage medium, including long term, short term, or other memory associated with the platform, and is not to be limited to any particular type of memory or number of memories, or type of media upon which memory is stored.

The methodologies described herein may be implemented by various means depending upon the application. For example, these methodologies may be implemented in hardware 1824, software 1826, firmware 1828, or any combination thereof. For a hardware implementation, the processing units may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the methodologies may be implemented with modules (e.g., procedures, functions, and so on) that perform the functions described herein. Any machine-readable medium tangibly embodying instructions may be used in implementing the methodologies described herein. For example, software codes may be stored in memory 1822 and executed by processor 1820. Memory may be implemented within the processor unit or external to the processor unit.

For example, software 1826 may include program code stored in memory 1822 and executed by processor 1820 and may be used to run the processor and to control the operation of platform 1800 as described herein. Program code stored in a computer-readable medium, such as memory 1822, may include program code to detect, by a sensor array coupled to a touch-sensitive screen of a device, signals reflected from an object with respect to the touch-sensitive screen and to capture, based on the reflected signals, one or more images of the object, where at least a portion of the ultrasonic sensor array overlaps with at least a portion of the touch-sensitive screen. The program code stored in a computer-readable medium may additionally include program code to cause the processor to control any operation of platform 1800 as described further below.

If implemented in firmware and/or software, the functions may be stored as one or more instructions or code on a computer-readable medium. Examples include computer-readable media encoded with a data structure and computer-readable media encoded with a computer program. Computer-readable media includes physical computer storage media. A storage medium may be any available medium that can be accessed by a computer. By way of example and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer; disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The foregoing disclosure is not intended to limit the present disclosure to the precise forms or particular fields of use disclosed. As such, it is contemplated that various alternate modifications to the present disclosure, whether explicitly described or implied herein, are possible in light of the disclosure. Changes may be made in form and detail without departing from the scope of the claims. Thus, the present disclosure is limited only by the claims.

## Claims

1. A system for capturing one or more sensor images of an object (104), the system comprising:
a touch system (112) including a touch-sensitive screen (302) and a display (304);
wherein the touch system (112) is configured to detect the object (104) when the object (104) is within a proximity to the touch-sensitive screen (302), and to derive one or more parameters based on an interaction with the object (104); and
a fingerprint sensor system (114) including a ultrasonic sensor array (116) and a processing component (132), wherein the ultrasonic sensor array (116) is coupled to the touch-sensitive screen (302), wherein the ultrasonic sensor array (116) includes a set of transmitters configured to transmit ultrasonic signals and a set of receivers configured to receive ultrasonic signals and wherein at least a portion of the sensor array (116) overlaps with at least a portion of the touch-sensitive screen (302); and
wherein the processing component (132) is configured to determine, based on the one or more parameters, whether to capture one or more images of the object (104) via the ultrasonic sensor array (116) and to determine, based on the one or more parameters, optimal sensor operating parameters and to adjust the sensor operating parameters, and in response to a determination, derived by the touch system (112), to capture one or more images of the object (104), the processing component (132) is configured to activate the set of transmitters to transmit an ultrasonic signal and is further configured to capture, based on the ultrasonic signal reflected from the object (104) the one or more images of the object (104),
wherein the object (104) is a finger (204), and wherein the touch system (112) includes capacitive electrodes that are configured to detect liveness of the finger (204) by measuring the capacitance against time, and wherein the capacitive electrodes are segmented on an upper layer of the ultrasonic sensor array (116).

2. The system of claim 1, wherein the processing component (132) is configured to extract ultrasonic signals detected by the ultrasonic sensor array (116) to thereby capture one or more ultrasonic images of the object (104, 204).

3. The system of claim 1, further including:
an object detection system (110) including the touch system (112) and the fingerprint sensor system (114), wherein the object detection system (110) captures the one or more images based on the one or more parameters,
wherein the one or more parameters is at least one parameter selected from the group consisting of a location of the object (104, 204), a size of the object (104, 204), a movement of the object (104, 204), and a duration of time in which the object (104, 204) touches the touch-sensitive screen (302) of the device.

4. The system of claim 1, further including:
an object detection system (110) including the touch system (112) and the fingerprint sensor system (114), wherein the object detection system (110) captures the one or more images based on the one or more parameters,
wherein the object (104) is one or more of a user's fingers (204) and a parameter of the one or more parameters includes the number of fingers (204), and wherein optionally, the touch system (112) derives, based on the detection, the one or more parameters including locations of the user's fingers (204) touching the touch-sensitive screen (302), and the touch parameters trigger portions of the ultrasonic sensor array (116) associated with the locations for simultaneous fingerprinting of the user's fingers (204).

5. The system of claim 1, wherein the touch system (112) is configured to detect an outline based on the object's (104, 204) touch on the surface of the touch-sensitive screen (302).

6. The system of claim 5, wherein the processing component (132) is configured to stitch one or more image templates with the one or more captured images and to determine a new image template based on the stitched one or more image templates with the one or more captured images, or
wherein the processing component (132) is configured to extract one or more features from the one or more captured images, to stitch one or more feature templates with the one or more extracted features, and to determine a new feature template based on the stitched one or more feature templates with the one or more extracted features.

7. The system of claim 5, wherein the processing component (132) identifies an imaging region based on the finger (204) outline and insonifies the imaging region to capture the one or more images of the object (104, 204).

8. The system of claim 1, wherein the ultrasonic sensor array (116) is positioned underneath the touch-sensitive screen (302) or is incorporated into the touch-sensitive screen (302), or
wherein the touch-sensitive screen (302) is above the display (304) or is incorporated into the display (304).

9. The system of claim 1, wherein the device is at least one of a smartphone, tablet computer, wearable health monitor, personal digital assistant, or laptop.

10. A method of capturing one or more sensor images of an object (104), the method comprising:
detecting, by a touch-sensitive screen (302) of a device, proximity of an object to the touch-sensitive screen (302); deriving one or more parameters from an interaction between the touch-sensitive screen (302) and the object (104);
the device including a fingerprint sensor system (114) with an ultrasonic sensor array (116);
determining, based on the one or more parameters, whether to capture one or more images of the object (104);
determining, based on the one or more parameters, optimal sensor operating parameters and;
adjusting the sensor operating parameters;
in response to a determination to capture one or more images of the object (104), activating a set of transmitters of the ultrasonic sensor array (116) to transmit an ultrasonic signal towards the object;
receiving an ultrasonic signal reflected from the object at a set of receivers to thereby capture, based on the reflected ultrasonic signal, one or more images of the object (104),
wherein at least a portion of the ultrasonic sensor array (116) overlaps with at least a portion of the touch-sensitive screen (302),
wherein the object (104) is a finger (204), and wherein capacitive electrodes are configured to detect liveness of the finger (204) by measuring the capacitance against time, and wherein the capacitive electrodes are segmented on an upper layer of the ultrasonic sensor array (116).

11. The method of claim 10, further including:
determining an object (104) outline based on detecting an object's (104, 204) touch on a surface of the touch-sensitive screen (302);
determining a rotation of the object (104, 204) from the object (104, 204) outline;
identifying an image template based on the object (104) outline and the rotation, the image template being a partial image of the object (104, 204); stitching one or more images of the object (104, 204) with the image template; and
creating a new image template based on the stitching.

12. The method of claim 10, further including:
determining an object (104) outline based on detecting an object's (104, 204) touch on a surface of the touch-sensitive screen (302);
determining a rotation of the object (104, 204) from the object (104, 204) outline;
extracting one or more features from the one or more captured images;
identifying a feature template based on the object (104, 204) outline, rotation, and extracted features, the feature template being a partial image of the object (104, 204);
stitching one or more features of the object (104, 204) with the feature template; and
creating a new feature template based on the stitching.

13. A computer-readable medium having stored thereon computer-executable instructions for performing operations of a method as defined in any one of claims 10 to 12.

14. The computer-readable medium of claim 13, wherein the one or more parameters is at least one parameter selected from the group consisting of touch size, area, x-y position, angle, orientation of the object (104, 204) movement of the object (104, 204), and rate of movement of the object (104, 204) touching the touch-sensitive screen of the device.

## Patentansprüche

1. Ein System zum Erfassen von einem oder mehreren Sensorbildern eines Objektes (104), wobei das System Folgendes aufweist:
ein Berührungssystem (112), das einen berührungsempfindlichen Bildschirm (302) und eine Anzeige (304) aufweist;
wobei das Berührungssystem (112) konfiguriert ist zum Detektieren des Objekts (104), wenn das Objekt (104) innerhalb einer Nähe zu dem berührungsempfindlichen Bildschirm (302) ist, und zum Herleiten von einem oder mehreren Parametern basierend auf einer Interaktion mit dem Objekt (104); und
ein Fingerabdrucksensorsystem (114), das eine Ultraschallsensoranordnung (116) und eine Verarbeitungskomponente (132) aufweist, wobei die Ultraschallsensoranordnung (116) an den berührungsempfindlichen Bildschirm (302) gekoppelt ist, wobei die Ultraschallsensoranordnung (116) einen Satz von Sendern, die zum Senden von Ultraschallsignalen konfiguriert sind, und einen Satz von Empfängern, die zum Empfangen von Ultraschallsignalen konfiguriert sind, aufweist, und wobei sich wenigstens ein Teil der Sensoranordnung (116) mit wenigstens einem Teil des berührungsempfindlichen Bildschirms (302) überlappt; und
wobei die Verarbeitungskomponente (132) konfiguriert ist zum Bestimmen, basierend auf dem einen oder den mehreren Parametern, ob ein oder mehrere Bilder des Objektes (104) über die Ultraschallsensoranordnung (116) erfasst werden sollen und zum Bestimmen, basierend auf dem einen oder den mehreren Parametern, von optimalen Sensorbetriebsparametern und zum Anpassen der Sensorbetriebsparameter, und wobei, ansprechend auf eine Bestimmung, die durch das Berührungssystem (112) hergeleitet wird, ein oder mehrere Bilder des Objektes (104) zu erfassen, die Verarbeitungskomponente (132) konfiguriert ist zum Aktivieren des Satzes von Sendern zum Senden eines Ultraschallsignals und weiter konfiguriert ist zum Erfassen, basierend auf dem Ultraschallsignal, das von dem Objekt (104) reflektiert wird, des einen oder der mehreren Bilder des Objektes (104),
wobei das Objekt (104) ein Finger (204) ist, und wobei das Berührungssystem (112) kapazitive Elektroden beinhaltet, die konfiguriert sind zum Detektieren einer Lebendigkeit des Fingers (204) durch Messen der Kapazität gegenüber der Zeit, und wobei die kapazitiven Elektroden auf einer oberen Schicht der Ultraschallsensoranordnung (116) segmentiert sind.

2. System nach Anspruch 1, wobei die Verarbeitungskomponente (132) konfiguriert ist zum Extrahieren von Ultraschallsignalen, die durch die Ultraschallsensoranordnung (116) detektiert werden, um dadurch ein oder mehrere Ultraschallbilder des Objektes (104, 204) zu erfassen.

3. System nach Anspruch 1, das weiter Folgendes aufweist:
ein Objektdetektionssystem (110), das das Berührungssystem (112) und das Fingerabdrucksensorsystem (114) aufweist, wobei das Objektdetektionssystem (110) das eine oder die mehreren Bilder basierend auf dem einen oder den mehreren Parametern erfasst,
wobei der eine oder die mehreren Parameter wenigstens ein Parameter sind, der aus der Gruppe ausgewählt ist, die aus einem Standort des Objektes (104, 204), einer Größe des Objektes (104, 204), einer Bewegung des Objektes (104, 204) und einer Zeitdauer, während der das Objekt (104, 204) den berührungsempfindlichen Bildschirm (302) der Einrichtung berührt, besteht.

4. System nach Anspruch 1, das weiter Folgendes aufweist:
ein Objektdetektionssystem (110), das das Berührungssystem (112) und das Fingerabdrucksensorsystem (114) aufweist, wobei das Objektdetektionssystem (110) das eine oder die mehreren Bilder basierend auf dem einen oder den mehreren Parametern erfasst,
wobei das Objekt (104) ein oder mehrere der Finger (204) eines Nutzers sind und ein Parameter des einen oder der mehreren Parameter die Anzahl von Fingern (204) aufweist, und wobei optional das Berührungssystem (112) basierend auf der Detektion den einen oder die mehreren Parameter herleitet, einschließlich Positionen der Finger (204) des Nutzers, die den berührungsempfindlichen Bildschirm (302) berühren, und der Berührungsparameterauslöserabschnitte der Ultraschallsensoranordnung (116), die mit den Positionen für eine gleichzeitige Fingerabdrucknahme der Finger (204) des Nutzers assoziiert sind.

5. System nach Anspruch 1, wobei das Berührungssystem (112) konfiguriert ist zum Detektieren eines Umrisses basierend auf der Berührung des Objekts (104, 204) auf der Oberfläche des berührungsempfindlichen Bildschirms (302).

6. System nach Anspruch 5, wobei die Verarbeitungskomponente (132) konfiguriert ist zum Zusammenfügen von einer oder mehreren Bildvorlagen mit dem einen oder den mehreren erfassten Bildern und zum Bestimmen einer neuen Bildvorlage basierend auf den zusammengefügten ein oder mehreren Bildvorlagen mit dem einen oder den mehreren erfassten Bildern, oder wobei die Verarbeitungskomponente (132) konfiguriert ist zum Extrahieren von einem oder mehreren Merkmalen aus dem einen oder den mehreren erfassten Bildern, zum Zusammenfügen von einer oder mehreren Merkmalsvorlagen mit dem einen oder den mehreren extrahierten Merkmalen, und zum Bestimmen einer neuen Merkmalsvorlage basierend auf den zusammengefügten ein oder mehreren Merkmalsvorlagen mit den einen oder mehreren extrahierten Merkmalen.

7. System nach Anspruch 5, wobei die Verarbeitungskomponente (132) eine Abbildungsregion basierend auf dem Umriss des Fingers (204) identifiziert und die Abbildungsregion beschallt, um das eine oder die mehreren Bilder des Objektes (104, 204) zu erfassen.

8. System nach Anspruch 1, wobei die Ultraschallsensoranordnung (116) unterhalb des berührungsempfindlichen Bildschirms (302) positioniert ist oder in dem berührungsempfindlichen Bildschirm (302) aufgenommen ist, oder wobei der berührungsempfindliche Bildschirm (302) über der Anzeige (304) ist oder in die Anzeige (304) aufgenommen ist.

9. System nach Anspruch 1, wobei die Einrichtung wenigstens eines von einem Smartphone, Tablet-Computer, einer am Körper tragbaren Gesundheitsüberwachungseinrichtung, einem persönlichen digitalen Assistenten oder einem Laptop ist.

10. Ein Verfahren zum Erfassen von einem oder mehreren Sensorbildern eines Objektes (104), wobei das Verfahren Folgendes aufweist:
Detektieren, durch einen berührungsempfindlichen Bildschirm (302) einer Einrichtung, einer Nähe eines Objekts zu dem berührungsempfindlichen Bildschirm (302); Herleiten von einem oder mehreren Parametern aus einer Interaktion zwischen dem berührungsempfindlichen Bildschirm (302) und dem Objekt (104); wobei die Einrichtung ein Fingerabdrucksensorsystem (114) mit einer Ultraschallsensoranordnung (116) aufweist;
Bestimmen, basierend auf dem einen oder den mehreren Parametern, ob das eine oder die mehreren Bilder des Objektes (104) erfasst werden sollen;
Bestimmen, basierend auf dem einen oder den mehreren Parametern, von optimalen Sensorbetriebsparametern; und
Anpassen der Sensorbetriebsparameter;
ansprechend auf eine Bestimmung, eines oder mehrere Bilder des Objektes (104) zu erfassen, Aktivieren eines Satzes von Sendern der Ultraschallsensoranordnung (116) zum Senden eines Ultraschallsignals in Richtung des Objekts;
Empfangen eines Ultraschallsignals, das von dem Objekt reflektiert wird, an einem Satz von Empfängern, um dadurch, basierend auf dem reflektierten Ultraschallsignal, ein oder mehrere Bilder des Objektes (104) zu erfassen,
wobei sich wenigstens ein Teil der Ultraschallsensoranordnung (116) mit wenigstens einem Teil des berührungsempfindlichen Bildschirms (302) überlappt,
wobei das Objekt (104) ein Finger (204) ist, und wobei kapazitive Elektroden konfiguriert sind, eine Lebendigkeit des Fingers (204) zu detektieren, und zwar durch Messen der Kapazität gegenüber der Zeit, und wobei die kapazitiven Elektroden auf einer oberen Schicht der Ultraschallsensoranordnung (116) segmentiert sind.

11. Verfahren nach Anspruch 10, das weiter Folgendes aufweist:
Bestimmen eines Umrisses eines Objekts (104) basierend auf Detektieren einer Berührung eines Objekts (104, 204) auf einer Oberfläche des berührungsempfindlichen Bildschirms (302);
Bestimmen einer Rotation des Objekts (104, 204) aus dem Umriss des Objekts (104, 204);
Identifizieren einer Bildvorlage basierend auf dem Umriss des Objekts (104) und der Rotation, wobei die Bildvorlage ein Teilbild des Objekts (104, 204) ist;
Zusammenfügen von einem oder mehreren Bildern des Objekts (104, 204) mit der Bildvorlage; und
Erzeugen einer neuen Bildvorlage basierend auf dem Zusammenfügen.

12. Verfahren nach Anspruch 10, das weiter Folgendes aufweist:
Bestimmen eines Umrisses eines Objekts (104) basierend auf Detektieren einer Berührung eines Objekts (104, 204) auf einer Oberfläche des berührungsempfindlichen Bildschirms (302);
Bestimmen einer Rotation des Objekts (104, 204) aus dem Umriss des Objekts (104, 204);
Extrahieren von einem oder mehreren Merkmalen aus dem einen oder den mehreren erfassten Bildern;
Identifizieren einer Merkmalsvorlage basierend auf dem Umriss des Objekts (104, 204), der Rotation und extrahierten Merkmalen, wobei die Merkmalsvorlage ein Teilbild des Objekts (104, 204) ist;
Zusammenfügen von einem oder mehreren Merkmalen des Objekts (104, 204) mit der Merkmalsvorlage; und
Erzeugen einer neuen Merkmalsvorlage basierend auf dem Zusammenfügen.

13. Ein computerlesbares Medium mit darauf gespeicherten von einem Computer ausführbaren Instruktionen zum Durchführen von Operationen eines Verfahrens nach einem der Ansprüche 10 bis 12.

14. Computerlesbares Medium nach Anspruch 13, wobei der eine oder die mehreren Parameter wenigstens ein Parameter ist, der aus der Gruppe ausgewählt ist die aus einer Berührungsgröße, einer Fläche, einer x-y-Position, einem Winkel, einer Ausrichtung des Objekts (104, 204), einer Bewegung des Objekts (104, 204) und einer Rate einer Bewegung des Objekts (104, 204), das den berührungsempfindlichen Bildschirm der Einrichtung berührt, besteht.

## Revendications

1. Système destiné à capturer une ou plusieurs images de capteur d'un objet (104), le système comprenant :
un système tactile (112) comportant un écran tactile (302) et un affichage d'un dispositif (304) ;
dans lequel le système tactile (112) est configuré pour détecter l'objet (104) quand l'objet (104) est à proximité de l'écran tactile (302), et pour déduire un ou plusieurs paramètres sur la base d'une interaction avec l'objet (104) ; et
un système capteur d'empreinte digitale (114) comportant un réseau de capteurs à ultrason (116) et un composant de traitement (132), dans lequel le réseau de capteurs à ultrason (116) est couplé à l'écran tactile (302), dans lequel le réseau de capteurs à ultrason (116) comporte un ensemble d'émetteurs configuré pour émettre des signaux ultrasons et un ensemble de récepteurs configuré pour recevoir des signaux ultrasons et dans lequel au moins une partie du réseau de capteurs (116) recouvre au moins une partie de l'écran tactile (302) ; et
dans lequel le composant de traitement (132) est configuré pour déterminer, sur la base desdits un ou plusieurs paramètres, s'il faut capturer une ou plusieurs images de l'objet (104) via le réseau de capteurs à ultrason (116) et pour déterminer, sur la base desdits un ou plusieurs paramètres, des paramètres de fonctionnement du capteur optimaux et pour régler les paramètres de fonctionnement du capteur, et, en réponse à une détermination, obtenue par le système tactile (112), qu'il faut capturer une ou plusieurs images de l'objet (104), le composant de traitement (132) est configuré pour activer l'ensemble d'émetteurs pour émettre un signal ultrason et est en outre configuré pour capturer, sur la base du signal ultrason réfléchi par l'objet (104), lesdites une ou plusieurs images de l'objet (104),
dans lequel l'objet (104) est un doigt (204), et dans lequel le système tactile (112) comporte des électrodes capacitives qui sont configurées pour détecter la vivacité du doigt (204) en mesurant la capacité en fonction du temps, et
dans lequel les électrodes capacitives sont segmentées sur une couche supérieure du réseau de capteurs ultrasons (116).

2. Système selon la revendication 1, dans lequel le composant de traitement (132) est configuré pour extraire des signaux ultrasons détectés par le réseau de capteurs à ultrason (116) pour ainsi capturer une ou plusieurs images de l'objet (104, 204) .

3. Système selon la revendication 1, comportant en outre :
un système de détection d'objet (110) comportant le système tactile (112) et le système capteur d'empreinte digitale (114), dans lequel le système de détection d'objet (110) capture lesdites une ou plusieurs images sur la base desdits un ou plusieurs paramètres,
dans lequel lesdits un ou plusieurs paramètres sont au moins un paramètre choisi parmi sélectionné dans le groupe constitué d'un emplacement de l'objet (104, 204), d'une taille de l'objet (104, 204), d'un mouvement de l'objet (104, 204) et d'une durée pendant laquelle l'objet (104, 204) touche l'écran tactile (302) du dispositif.

4. Système selon la revendication 1, comportant en outre :
un système de détection d'objet (110) comportant le système tactile (112) et le système capteur d'empreinte digitale (114), dans lequel le système de détection d'objet (110) capture lesdites une ou plusieurs images sur la base desdits un ou plusieurs paramètres,
dans lequel l'objet (104) est un ou plusieurs doigts d'un utilisateur (204) et un paramètre parmi lesdits un ou plusieurs paramètres comporte le nombre de doigts (204), et dans lequel optionnellement, le système tactile (112) déduit, sur la base de la détection, lesdits un ou plusieurs paramètres comportant des emplacements des doigts d'un utilisateur (204) touchant l'écran tactile (302), et les paramètres de toucher déclenchent des parties du réseau de capteurs ultrasons (116) associées aux emplacements pour une prise d'empreinte simultanée des doigts d'un utilisateur (204).

5. Système selon la revendication 1, dans lequel le système tactile (112) est configuré pour détecter un contour sur la base du toucher de l'objet (104, 204) sur la surface de l'écran tactile (302).

6. Système selon la revendication 5, dans lequel le composant de traitement (132) est configuré pour assembler un ou plusieurs modèles d'image avec lesdites une ou plusieurs images capturées, et pour déterminer un nouveau modèle d'image sur la base desdits un ou plusieurs modèles d'image assemblés avec lesdites une ou plusieurs images capturées, ou
dans lequel le composant de traitement (132) est configuré pour extraire une ou plusieurs caractéristiques à partir desdites une ou plusieurs images capturées, pour assembler un ou plusieurs modèles de caractéristiques avec lesdites une ou plusieurs caractéristiques extraites, et pour déterminer un nouveau modèle de caractéristique sur la base desdits un ou plusieurs modèles de caractéristiques avec lesdites une ou plusieurs caractéristiques extraites.

7. Système selon la revendication 5, dans lequel le composant de traitement (132) identifie une région d'imagerie sur la base du contour du doigt (204) et balaye avec des ultrasons la région à imager pour capturer lesdites une ou plusieurs images de l'objet (104, 204).

8. Système selon la revendication 1, dans lequel le réseau de capteurs à ultrason (116) est placée en-dessous de l'écran tactile (302) ou est incorporé dans l'écran tactile (302), ou
dans lequel l'écran tactile (302) est au-dessus de l'affichage (304) ou est incorporé dans l'affichage (304).

9. Système selon la revendication 1, dans lequel le dispositif est au moins un dispositif parmi un téléphone intelligent, une tablette, un moniteur de santé portable, un assistant numérique personnel, ou un ordinateur portable.

10. Procédé de capture d'une ou de plusieurs images de capteur d'un objet (104), le procédé comprenant les étapes suivantes :
la détection, par un écran tactile (302) d'un dispositif, d'une proximité d'un objet par rapport à l'écran tactile (302) ; l'obtention d'un ou de plusieurs paramètres à partir d'une interaction entre l'écran tactile (302) et l'objet (104) ;
le dispositif comportant un système capteur d'empreinte digitale (114) ayant un réseau de capteurs à ultrason (116) ;
la détermination, sur la base desdits un ou plusieurs paramètres, de s'il faut capturer une ou plusieurs images de l'objet (104) ;
la détermination, sur la base desdits un ou plusieurs paramètres, de paramètres de fonctionnement du capteur optimaux ; et
le réglage des paramètre de fonctionnement du capteur ;
en réponse à une détermination qu'il faut capturer une ou plusieurs images de l'objet (104), l'activation d'un ensemble d'émetteurs du réseau de capteurs à ultrason (116) pour émettre un signal ultrason vers l'objet ;
la réception d'un signal ultrason réfléchi par l'objet au niveau d'un ensemble de récepteurs pour capturer ainsi, sur la base du signal ultrason réfléchi, une ou plusieurs images de l'objet (104),
dans lequel au moins une partie du réseau de capteurs (116) recouvre au moins une partie de l'écran tactile (302),
dans lequel l'objet (104) est un doigt (204), et dans lequel des électrodes capacitives sont configurées pour détecter la vivacité du doigt (204) en mesurant la capacité en fonction du temps, et dans lequel les électrodes capacitives sont segmentées sur une couche supérieure du réseau de capteurs ultrasons (116).

11. Procédé selon la revendication 10, comportant en outre les étapes suivantes :
la détermination d'un contour de l'objet (104) sur la base d'un toucher de l'objet (104, 204) sur une surface de l'écran tactile (302) ;
la détermination d'une rotation de l'objet (104, 204) à partir du contour de l'objet (104, 204) ;
l'identification d'un modèle d'image sur la base du contour de l'objet (104) et de la rotation, le modèle d'image étant une image partielle de l'objet (104, 204) ;
l'assemblage d'une ou de plusieurs images de l'objet (104, 204) avec le modèle d'image ; et
la création d'un nouveau modèle d'image sur la base de l'assemblage.

12. Procédé selon la revendication 10, comportant en outre les étapes suivantes :
la détermination d'un contour de l'objet (104) sur la base d'un toucher de l'objet (104, 204) sur une surface de l'écran tactile (302) ;
la détermination d'une rotation de l'objet (104, 204) à partir du contour de l'objet (104, 204) ;
l'extraction d'une ou de plusieurs caractéristiques à partir desdites une ou plusieurs images capturées ;
l'identification d'un modèle de caractéristiques sur la base du contour, de la rotation et des caractéristiques extraites de l'objet (104, 204), le modèle de caractéristiques étant une image partielle de l'objet (104, 204) ;
l'assemblage d'une ou de plusieurs caractéristiques de l'objet (104, 204) avec le modèle de caractéristiques ; et
la création d'un nouveau modèle de caractéristiques sur la base de l'assemblage.

13. Support lisible par ordinateur sur lequel sont stockées des instructions exécutables par ordinateur pour mettre en œuvre des opérations d'un procédé selon l'une quelconque des revendications 10 à 12.

14. Support lisible par ordinateur selon la revendication 13, dans lequel lesdits un ou plusieurs paramètres sont au moins un paramètre sélectionné dans le groupe constitué d'une dimension de toucher, d'une surface de toucher, d'une position x-y de toucher, d'un angle de toucher, d'une orientation de l'objet (104, 204), d'un mouvement de l'objet (104, 204), et d'une vitesse du mouvement de l'objet (104, 204) touchant l'écran tactile du dispositif.
